# EUROPEAN PATENT SPECIFICATION

(11) **EP 1 121 677 B1**
(45) Date of publication and mention of the grant of the patent: **14.04.2004**
(21) Application number: 99970492.7
(22) Date of filing: 18.02.1999
(51) Int. Cl.: G08G 1/0969

(54) **DRIVER INFORMATION SYSTEM**
FAHRERINFORMATIONSSYSTEM
SYSTEME D'INFORMATION POUR CONDUCTEURS

(30) Priority: 14.10.1998 US 104275 P
(43) Date of publication of application: 08.08.2001
(73) Proprietor: Siemens VDO Automotive Corporation, Auburn Hills, Michigan 48326-2980 (US)
(72) Inventor: DRURY, Bob, Novi, MI 48375 (US); KNOCKEART, Ronald, P., Clarkston, MI 48348 (US); RODE, Melvin, A., Orion, MI 48359 (US); BROWN, Steven, Shelby Township, MI 48315 (US); ASHER, Harry, Garden City, MI 48135 (US); JOZEFOWICZ, Paul, A., Roseville, MI 48066 (US)
(74) Representative: Neill, Andrew Peter
(86) International application number: PCT/US1999/003614
(87) International publication number: WO 2000/022593

(56) References cited:
- WO-A-98/43044
- DE-A- 3 527 343
- DE-A- 3 839 959
- DE-A- 19 808 802
- GB-A- 2 195 868
- US-A- 5 239 700
- US-A- 5 635 953
- PATENT ABSTRACTS OF JAPAN vol. 097, no. 011, 28 November 1997 (1997-11-28) & JP 09 178495 A (SONY CORP), 11 July 1997 (1997-07-11)
- PATENT ABSTRACTS OF JAPAN vol. 096, no. 010, 31 October 1996 (1996-10-31) & JP 08 145705 A (KENWOOD CORP), 7 June 1996 (1996-06-07)

## Description

### Background

This invention relates to an information system for motor vehicles.

Vehicle information systems have been developed that provide various types of information to operators of those vehicles. In particular, navigation systems have been developed. One type of navigation system, an autonomous navigation system, uses an on-board map, typically stored on a removable medium such as a compact optical disk (e.g., CD-ROM). The navigation system uses the on-board map to plan a route from a starting point to a destination, which is specified by the operator of the vehicle. Updating an autonomous system's map, for example to add or correct information, typically involves replacing the removable medium.

In some navigation systems the operator inputs the desired destination (and the current location, if required by the system) by entering a spelling of the destination. Some systems also allow an operator to select from a stored list of "points of interest," such as a list of gas stations or restaurants. Once the operator inputs the destination, the system plans a route along the road network to the destination. The route is typically planned to provide a shortest distance or to try to provide the shortest travel time. Once the route is planned, the operator is guided by the system along the route.

Various approaches to route guidance have been used. A particularly simple approach is to provide the operator with a sequence of discrete instructions, for instance, at intersections where the operator must turn from one street onto another. The operator indicates when he or she is ready for the next instruction. For example, the instructions are provided as an audio output, and the operator says "next" when ready for another instruction.

Another approach to route guidance uses a displayed map on which the planned route and the vehicle's location are dynamically displayed. The operator uses the map to decide when and where to turn in order to follow the planned route.

Some guidance approaches are aided by in-vehicle sensors that are used to estimate the location of the vehicle. For instance, a magnetic compass is used to estimate the direction of travel, and a velocity sensor is used to estimate the distance traveled. In addition, the location of the vehicle can be estimated using the Global Positioning System (GPS). In GPS, multiple satellites emit signals that allow an in-vehicle GPS receiver to estimate its absolute location.

Other types of vehicle information systems have also been developed. In some systems, traffic related information, such as traffic advisories, is broadcast to specially equipped in-vehicle radio receivers.

JP-A-09-178 499 discloses an in-vehicle navigation system in which fine road detail near the destination is provided by a remote server computer.

### Summary

The invention is an in-vehicle navigation system for providing route information through a road network. The system includes a first stored database, which may be provided on a removable storage medium such as a CD-ROM, includes information related to roads in the road network within a first geographic area. The system optionally includes a second stored database that includes information related to major roads in the road network within a second geographic area. The first geographic area includes a common area within the second geographic area, and the first stored database includes information about roads in the common area that is not included in the second stored database. The system also includes an onboard computer programmed to perform the functions of (a) accepting a specification of a starting and an ending location in the road network, (b) if the starting and the ending locations are within the first geographic area, planning a route through the road network from the starting to the ending locations without communicating with a remote server computer, and (c) only if the starting or the ending locations are not within the first geographic area, communicating with a remote server computer to retrieve information related to a route through the road network from the starting to the ending locations. This system has the advantage that it can function autonomously within the first geographic area without necessarily requiring the assistance of the remote server. The system can also provide navigation functions outside the first geographic, for example, by retrieving route information from the remote server for portions of a route outside the first geographic area.

Other features and advantages of the invention will be apparent from the following description, and from the claims. The description also presents additional possibilities, not within the scope of the invention as claimed.

### Description of Drawings

FIG. **1** is a block diagram of a vehicle navigation system;
FIG. **2** is a block diagram of in-vehicle components of the system;
FIGS. **2A-C** show an integrated input/output device;
FIG. **3** is a block diagram including components of a server system;
FIGS. **4A-B** show an in-vehicle system software architecture;
FIG. **5** is a block diagram of a server system software architecture;
FIG. **6** is a schematic map showing the road network in an exemplary region;
FIG. **7** is a graph representation of the road network in the exemplary region;
FIG. **8** illustrates an exemplary planned route that is downloaded from a server system to a vehicle;
FIG. **9** is an exemplary spot map that is downloaded from a server system to a vehicle;
FIG. **10** is a main roads map that is preloaded in a vehicle;
FIG. **11** shows data structures of an in-vehicle database;
FIG. **12** shows the structure of text tables in the in-vehicle database;
FIG. **13A** shows a representative link of a main roads network;
FIG. **13B** shows data structures of an in-vehicle database encoding a main roads network;
FIG. **14** shows elements of an in-vehicle database which encode Points of Interest information;
FIG. **15A** is a pseudocode listing of an in-vehicle route planning procedure;
FIG. **15B** is a pseudocode listing of a server route planning procedure;
FIG. **16** is a pseudocode listing of a startup maneuver procedure;
FIG. **17** is a pseudocode listing of a route following procedure;
FIG. **18** is a pseudocode listing of a route replanning procedure;
FIG. **19** illustrates a extensible server architecture;
FIGS. **20A-20C** illustrate approaches to updating an in-vehicle system;
FIGS. **21A-21B** illustrate additional information services provided by a server system;
FIG. **22** is a block diagram of an extensible server system; and
FIG. **23A** is block diagram of a standard module cellular telephone architecture;
FIG. **23B** is a block diagram in which an onboard computer is coupled between a handset module and a cellular phone module;
FIG. **23C** is a flow chart illustrating a menu-based user interface presented using the handset module;
FIG. **24** illustrates a hybrid driver information system;
FIG. **25** illustrates use of printed maps in a user interface;
FIG. **26A** shows the logical blocks of an information pod; and
FIG. **26B** illustrates the physical arrangement of an information pod.

### Description

### 1 OVERVIEW (FIGS, 1. 6-10)

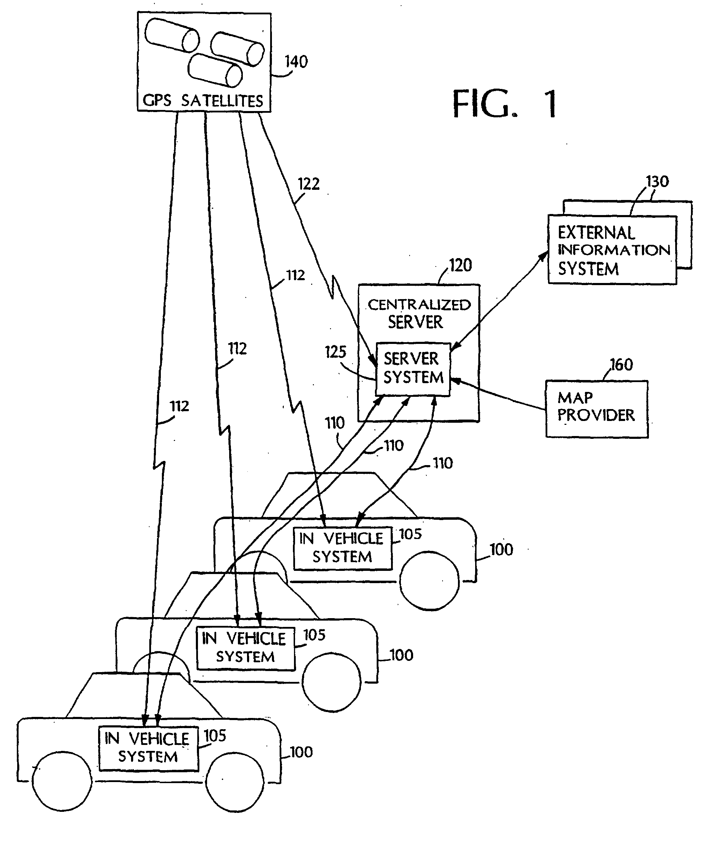

### 1.1 Architecture (FIG. 1)

Referring to FIG. **1**, a vehicle information system provides services, including a route planning and guidance (i.e., a "navigation") service, to the operators of multiple vehicles **100**, which are free to drive throughout a wide geographic area. To provide these services to the operators of the vehicles, the vehicle information system performs some functions in a server system **125** at a centralized server **120** that is at a fixed location, and other functions in in-vehicle systems **105** installed in each of the vehicles **100**. The vehicle information system also includes a positioning system that provides a reference for estimating the locations of vehicles **100** in absolute terms (i.e., in terms of their latitudes and longitudes). In particular, Global Positioning System (GPS) satellites **140** provide signals that when received at the vehicles enable the in-vehicle systems to estimate their locations.

The navigation service of the vehicle information system as a whole, which are provided through a combination of functions that are performed by server system **125** and by an in-vehicle system **105**, enable an operator of a vehicle to specify a desired destination, and then to be guided by the system to that destination while driving the vehicle. In-vehicle system **105** tracks (i.e., repeatedly estimates) the position of the vehicle as it travels to the desired destination, and provides instructions to the operator to guide the operator to the desired destination. For instance, in-vehicle system **105** provides an instruction to make a turn at an upcoming intersection while the vehicle is approaching the intersection. Also, in-vehicle system **105** typically determines when the operator has made an error and the vehicle is off a planned route. If the vehicle is off route, in-vehicle system **105** provides the operator with instructions to continue to guide the vehicle to the destination despite the error.

Server system **125** provides various services to in-vehicle system **105**, in a "client-server" arrangement in which in-vehicle systems **105** request services from server system **125**. For instance, a route planning function is performed by server system **125** at the request of in-vehicle system **105** while route guidance functions are performed by in-vehicle system **105**.

In-vehicle systems **105** are coupled to server system **125** by wireless communication links. In particular, in-vehicle systems **105** at times communicate with server system **125** over signal paths **110** using modulated data signals that are passed over a standard analog cellular telephone system (i.e., using the Advanced Mobile Phone Service (AMPS) standard). An in-vehicle system **105** typically operates in an autonomous mode after an initial exchange with server system **125**. During the initial exchange, a starting location (or other location-related data), speed and heading, and a desired destination are uploaded from the in-vehicle system to the server system and then a planned route is downloaded from the server system to the in-vehicle system. After planned route information is downloaded to the vehicle from the server system, the in-vehicle system does not require further interaction with the server system to operate in its autonomous route guidance mode. While in the autonomous route guidance mode the in-vehicle system can recover from an operator going off the planned route without necessarily requiring further communication with the server system.

In-vehicle systems **105** receive signals from GPS satellites **140** over radio frequency communication paths **112**. Server system **125** also receives signals from GPS satellites **140** over radio frequency communication path **122**. As is described more fully below (see Section 2.4), data derived from signals received by server system **125** from GPS satellites **140** is used at times by both server system **125** and in-vehicle systems **105** to improve the location estimates of vehicles **100**, for instance, using "differential" GPS calculations.

Referring still to FIG. **1**, server system **125** relies on a map provider **160**, for instance, a vendor of map-related information, to provide information related to the road network, including the locations and types of road segments that interconnect to form the road network. Map provider **160**, or some other external information provider, also provides other map-related information such as the locations of typical points of interest such as city centers, restaurants, and gas stations.

In some versions of the system, server system **125** also serves as a gateway to external information systems **130**. These external systems provide information used by server system **125**, or provide information that is passed directly to in-vehicle systems **105**. For instance, an external information system **130** can provide traffic-related information that is used by server system **125** to determine a fastest route from a starting to a destination location. In another instance, an external information system **130** can provide communication services to vehicle operators, such as a paging service.

Alternative communication approaches between in-vehicle systems **105** and server system **125** can be used. Use of standard analog cellular telephone links is useful due to the broad geographic coverage in North America of the infrastructure needed to support such links. In other parts of the world, digital cellular telephone links may be more appropriate if the necessary infrastructure is available. Such a digital-based infrastructure is expected to be available in North America in the future. A satellite-based communication system can alternatively be used to link the in-vehicle systems to the server system. Also, other wireless data communication systems can be equivalently used to couple in-vehicle systems **105** and server system **125**. Such systems are currently being deployed in North America (e.g., ARDIS, RAM, CDPD, GSM), although the geographic coverage is not yet adequate to support this system and provide broad geographic availability to vehicle operators. Many wireless communication systems also include a "short message" capability with which short messages can be transferred. Such short message services can alternatively be used for some types of communication between the in-vehicle systems and the server system, for instance for notification of exception conditions.

Also, alternative positioning systems can be used rather than relying on signals from GPS satellites **140**. For instance, a roadside optical or radio frequency beacon systems can be used to provide location information to vehicles. Such a roadside beacon system is not broadly available in North America. On the other hand, the GPS-based approach provides broad geographic coverage today.

Centralized server **120** is "centralized" in that it provides services at one location for vehicles that are distributed throughout a geographic area. The centralized server's location does not have to be "central" or even located in the same geographic area as the vehicles it services. Also, although the system is described in terms of a single centralized server **120**, multiple servers can alternatively be used. When multiple servers are used, in-vehicle systems **105** can be configured to access particular servers for all, or for particular types of, service requests.

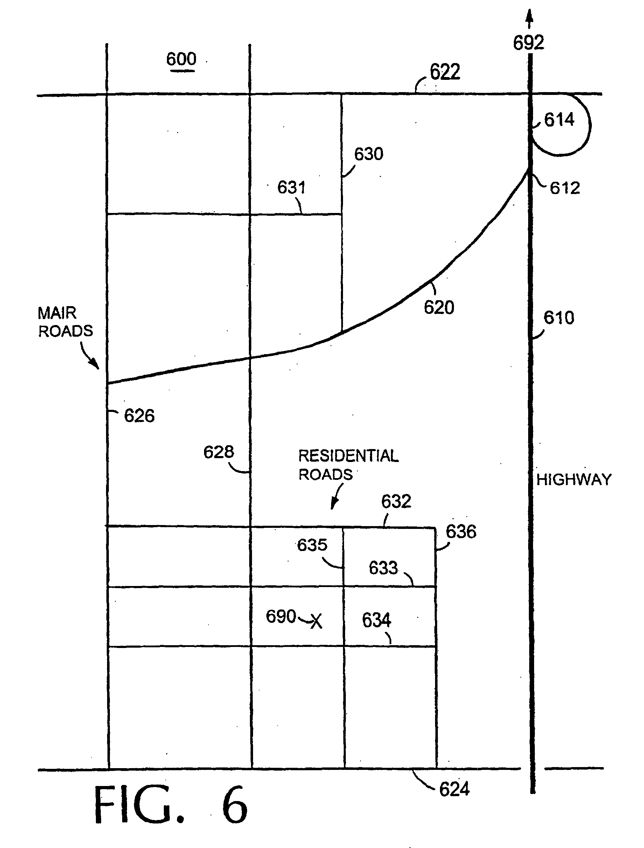

### 1.2 Operation (FIGS. 6-10)

General operation of the navigation service of the vehicle information system can be understood with reference to FIGS. **6-10**, which illustrate various representations of exemplary maps and routes that are used in the system. These drawings correspond to a common geographic area that is shown schematically in FIG. **6**. The geographic area shown is only a very small portion of the area that is typically supported by the navigation service, which may be as large as the United States or multiple countries in Europe.

Referring to FIG. **6**, a map **600** is illustrated with three classes of roads shown in different line widths. In general, roads are classified according to their size or typical vehicle speed, for example, highways, limited access roads, main roads, and side streets. In FIG. **6**, a highway **610** is shown as a thick line running along the vertical orientation of the drawing. A set of main roads **620, 622, 624**, and **626**, which is shown in medium thickness lines, form an intersecting network. Main roads **620** and **622** are connected to highway **610** at two on-ramps, **612** and **614**, respectively. A set of residential roads (side streets) **630-636** completes the road network.

In this example, an operator and vehicle are initially at the point marked 'X' **690**. The operator wants to get to a desired destination **692** that is not shown in the drawings, but that is best accessed by following highway **610** as indicated in the drawings.

As the first step, the operator enters a specification of desired destination **692** into in-vehicle system **105**. For instance, the operator enters the city, street, and street number of a destination address. The destination is validated by the in-vehicle system, for instance validating that the street address is in an allowable range for the specified street.

After in-vehicle system **105** has accepted and validated the destination specification, it establishes a communication session with server system **125** over cellular telephone link **110** and sends the destination specification to the server system. The in-vehicle system also sends information to the server system that allows the server system to determine the vehicle's starting location **690**. For instance, the in-vehicle system sends the estimated latitude and longitude output obtained from a GPS receiver in the vehicle, or sends other raw output from its GPS receiver.

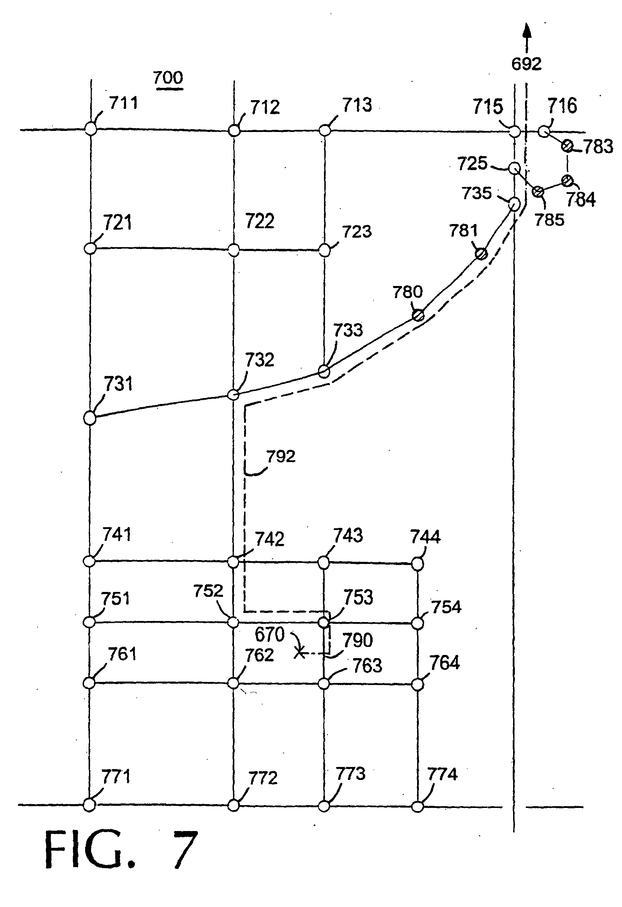

Referring to FIG. **7**, the server system includes a stored detailed representation of the road network **700**. The network is represented as a graph with a set of nodes, indicated in the drawing by open circles, that are interconnected by links (arcs) that correspond to road segments. Links in the graph have associated stored data which includes the class of the road represented by the links. Each node in the graph has associated data including its latitude and longitude (or equivalently its relative location to another node that is at a known location), as well as other information, such as which turns from one link to another link joined at the node are valid. Many links are approximated by straight line segments joining the nodes at each end of the link. Some links, such as the links joining nodes **733** and **735** or nodes **716** and **725**, represent curved road segments. To represent such curved road segments, links can include one or more "shape points," represented as hatched circles **780-785** in the drawing. Each shape point has location data associated with it. The segments between adjacent shape points, or between nodes and adjacent shape points, are approximated by straight line segments.

Server system **125** uses the information provided by the in-vehicle system related to the location of the vehicle **690** to determine the starting latitude and longitude of the vehicle. Based on the vehicle's latitude and longitude, speed, and heading, the server system finds the vehicle's starting link in its graph representation of road network **700**. In this example, this first point on the road network is on the link joining nodes **753** and **763**.

The server system next computes a best path to destination **692**. "Best" can be based on a variety of criteria such as the smallest total distance, or the shortest expected travel time using information related to the expected speed of travel along links of the roadway graph. In this example, this planned route is illustrated by the dotted line **792**. Referring back to FIG. **6**, this planned route has the vehicle starting on residential road **635** and first making a left on residential road **632**. The vehicle then is to make a right turn onto main road **628**, and a right onto main road **620**. Main road **620** merges onto highway **610**. The vehicle then is to continue along highway **610** toward destination **692**.

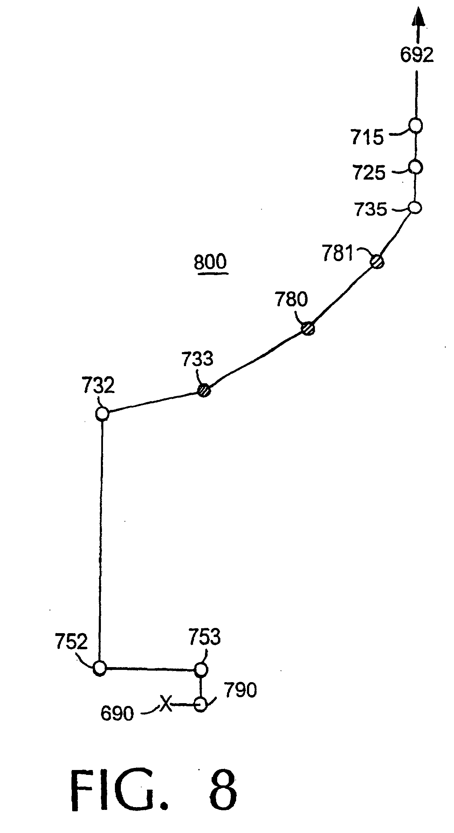

Referring to FIG. **8,** planned route **800** is downloaded from the server system to the in-vehicle system in the form of a sequence of links joined by nodes. Each node along the route (other than necessarily the start node) corresponds to a node in the server's road network **700** (FIG. **7**). Nodes along planned route **800** correspond to "maneuvers" that must be carried out by the operator. For example, the maneuver at node **790** is "turn left onto road **635"** (See FIG. **6**). Each link along the route can have one or more "way points." Way points correspond to shape points in the server's road network **700**, or to nodes which are intersections at which the operator does not have to make a maneuver, that is, nodes of the server's road network **700** at which the operator simply continues without turning or making some other maneuver. In FIG. **8**, nodes **733, 780**, and **781** are way points on the link joining maneuver points **732** and **735**.

In principle, if the operator could always be expected to follow directions exactly, then the operator will drive to the desired destination. However, various factors may result in the operator not reaching the desired destination without further planning. These factors include:
- Inaccuracy in the estimate of the vehicle's initial location, for example due to closely spaced side streets,
- The operator's inability to follow directions, particularly during the initial startup portion of a route where the directions may be complicated,
- Errors in the system's map of the road network, for instance, due to unexpected road construction, and
- Inaccuracy in estimating the distance traveled by the vehicle.

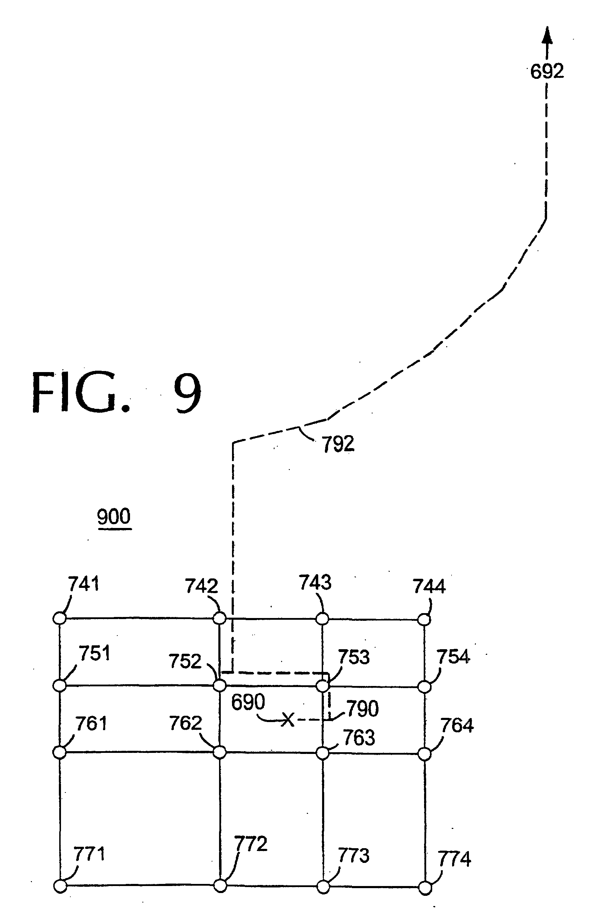

In order to account for errors associated with the startup portion of the route, the server system downloads to the in-vehicle system a detailed map **900**, known as a "spot map," around initial location **690**. Referring to FIG. **9**, map information related to nodes and links in the vicinity of starting location **690** are downloaded. Spot map **900** has as high a level of detail as does the server's road network **700**, but is limited geographically, for instance including all nodes within two links of the starting location.

The server system can also download a spot map around one, or more, maneuver points, or around the destination. For instance, if a maneuver is particularly complex, the server system would download a spot map around that maneuver point.

After planned route **800** and spot map **900** are downloaded to the vehicle, communication between in-vehicle system **105** and server system **125** is typically completed. At this point, the operator can preview the route, or can start traveling to the destination. The operator can also start traveling before the planned route is downloaded. The in-vehicle system begins providing initial guidance commands and displaying the spot map around the starting location to the operator as soon as it is downloaded without necessarily waiting for the complete route to be downloaded.

While traveling to the destination, the in-vehicle system attempts to track the location of the vehicle. As the in-vehicle system determines that the vehicle is approaching each maneuver point, it provides aural and graphical instructions to the operator regarding the action to take at that maneuver point. If a spot map has been downloaded for the maneuver, the in-vehicle system displays the spot map in addition to, or instead of, the graphical instructions.

During the initial portion of the trip or near a maneuver for which the server system has provided a spot map, while the vehicle is in the region of a spot map **900**, the spot map is used by the in-vehicle system to guide the operator onto the planned route. In particular, the in-vehicle system displays the spot map and the initial portion of the planned route to the operator. In addition, the in-vehicle system displays the tracked location of the vehicle in conjunction with the spot map. This allows the operator to recover from errors during the initial portion of the trip by seeing that the tracked location is not following the planned route, and using the roads shown on the spot map to determine what turns to make to get back to the planned route.

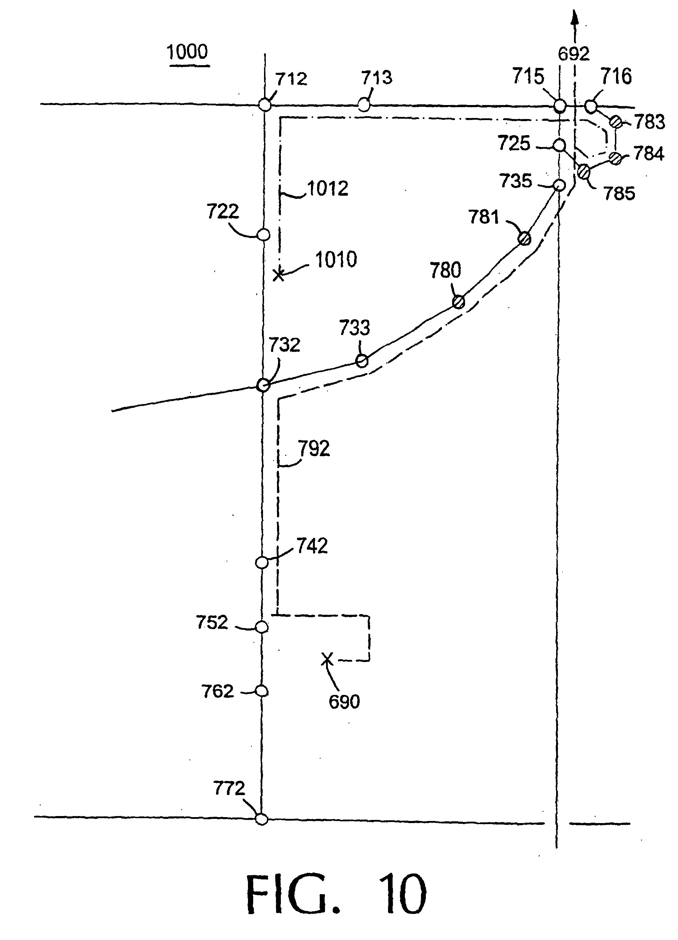

The in-vehicle system also has a preloaded main roads network **1000**, which is a stored version of the map that includes only main and larger roadways (i.e., it does not include residential roads). A portion of the main roads network **1000** is shown in FIG. **10**. Main roads network **1000** has a similar form as the server's road network **700** shown in FIG. **7**, except that fewer links are included. For reference, the planned route **792** is illustrated by a dotted line.

While traveling toward the destination, the in-vehicle system tracks an estimated location of the vehicle. If the operator does not properly follow the directions, the in-vehicle system will typically detect when the vehicle has diverged too far from the planned route. When it detects that the vehicle is off-route, it plans a corrected route based on the main roads map shown in FIG. **10** which get the vehicle back onto the originally planned route.

Referring back to FIG. **6**, in this example, the operator fails to make the right turn from main road **628** onto main road **620**, continuing instead on main road **628**. Referring back to FIG. **10**, the in-vehicle system determines that the vehicle is off-route at a point **1010**, which corresponds to a point on a main road segment between nodes **732** and **722** when it should have been at a point on the link joining points **732** and **735**. Using its main road network **1000**, the in-vehicle system plans a corrected route indicated by the dashed line **1012**. This re-planned route joins the originally planned route at point **725**. Note that in replanning a route after an off-route condition occurs, the in-vehicle system does not necessarily have to contact the server system, relying instead on its main roads network **1000.**

The in-vehicle system therefore uses a combination of main roads network **1000** that is preloaded into the vehicle and spot maps **900** that are downloaded to the vehicle along with planned route **800** to replan the route when the vehicle is detected to not be following the planned route.

In an alternative version of the system, spot maps **900** can be used to augment main roads network **1000** to re-plan the route if the operator fails to follow the planned route during the initial portion of the trip.

In the system operation described above, a vehicle operator receives instructions in the form of
- Graphically presented maneuver instructions,
- Aural maneuver instructions, and
- Spot map based instructions.
Alternative versions of the system use subsets of these forms of instructions. For instance, a version of the system can use aural instructions alone. Another version of the system can use graphically presented maneuver instructions without any map based or aural instructions. Other combinations or instruction modes can be used as well. Furthermore, alternative versions of the system can give the vehicle operator control over which instruction modes are used, for instance, allowing the operator to switch between map based and graphical instruction based modes.

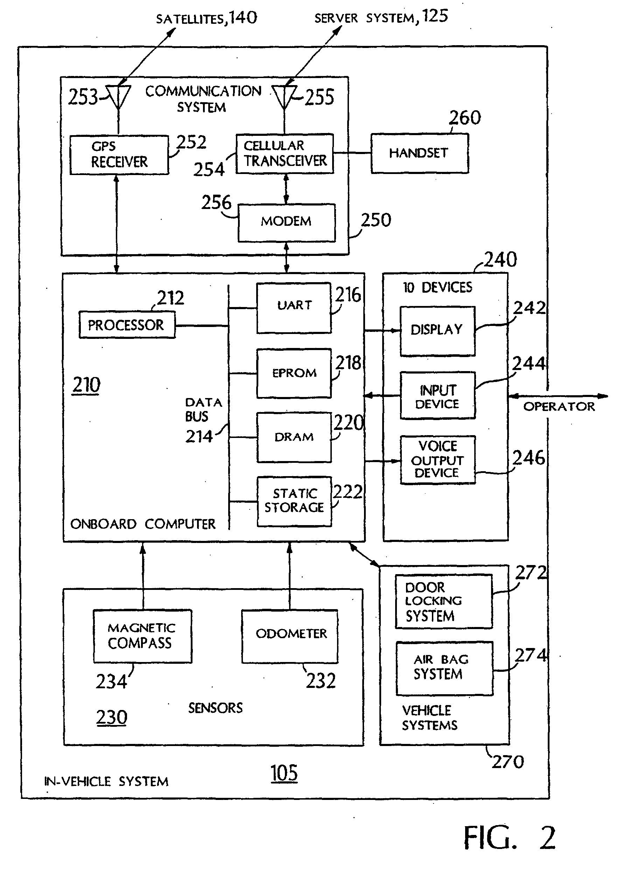

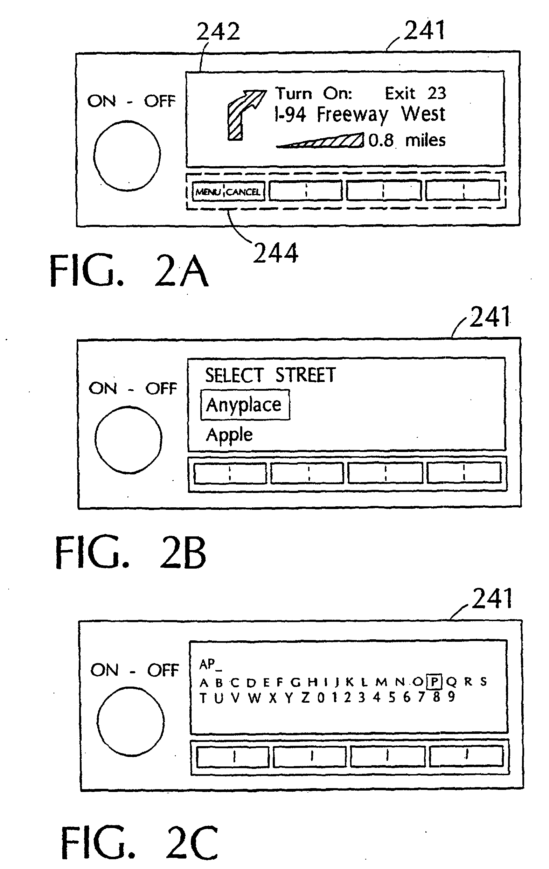

### 2 HARWARE AND SOFTWARE ARCHITECTURE (FIGS. 2-5)

### 2.1 In-Vehicle System Components (FIG. 2)

Referring to FIG. **2**, each in-vehicle system **105** includes an onboard computer **210** which is used to coordinate the operation of other components, including sensors **230**, which provide information related to the motion of the vehicle, input/output (I/O) devices **240**, which provide an interface between the operator of the vehicle and the navigation system, and communication system **250**, which provides communication links from GPS satellites **140** and to and from server system **125**. Onboard computer **210** is also coupled to vehicle systems **270**, which include door locking system **272** and airbag system **274**.

Onboard computer **210** has limited storage and processing capabilities. In this version of the in-vehicle system, onboard computer **210** includes a processor **212** coupled to other components of the onboard computer over a data bus **214**. The other components includes dynamic random access memory (DRAM) **220**, which provides 2 MB of working storage for processor **212**, erasable programmable read-only memory (EPROM) **218**, which provides 4 MB of non-volatile storage, and universal asynchronous receiver-transmitter (UART) **216**, which provides serial communication capabilities to other system components. Alternative hardware configurations, for instance, with more or less memory, can be used.

Processor **212** is also coupled to a static storage **222** which is a non-volatile storage used to store code and data for operation of the system. In particular, as is described further below, static storage **222** is used to store map-related information, such as main roads network **1000** (FIG. **10**), which is used during route planning and guidance procedures executed on onboard computer **210**. Static storage **222** is a removable 40 MB flash memory system which emulates a disk storage device. Alternative static storage devices can be used, including removable and non-removable disk storage devices and semiconductor memories.

Sensors **230** include a velocity sensor **232** which provides a velocity signal to onboard computer **210**. The velocity signal encodes the distance traveled by the vehicle by providing a constant number of pulses per revolution of the output of the vehicle's transmission, and which therefore provides a relative constant number of pulses per mile traveled. Sensors **230** also includes a magnetic compass **234** which provides a signal to onboard computer **210** encoding the orientation of the vehicle. Alternative versions of the system do not necessarily include magnetic compass **234**, relying only on the velocity signal. Also, alternative versions may include other sensors of the state of the vehicle, including a gyroscope or accelerometers for determining the rate of rotation of the vehicle, or a differential velocity sensor, which provides the relative speed of the wheels on either side of the vehicle thereby encoding a turning radius of the vehicle as it goes through a turn.

I/O devices **240** includes a display **242**. In versions of the in-vehicle system in which only graphical commands are displayed, display **242** is a small (e.g., 4-5 lines of text high, 64x240 pixels) monochrome liquid crystal display (LCD) which is used to provide text and schematic image instructions to the operator of the vehicle. In versions of the in-vehicle system in which spot maps are displayed to the operator, display **242** is 4 to 5 inch diagonal display with approximately 200x200 pixels, which is large enough and has a high enough resolution to provide a detailed map display to the operator that can be used to provide map-based directions to the operator. Also, in alternative versions of the system, visual feedback is not necessarily used, relying instead solely on audio instructions from the system to the operator.

I/O devices **240** also includes an input device **244**. Input device **244** includes multiple push buttons associated with display **242**. The operator uses these buttons to select alternatives shown on display **242**, or to scroll the list of displayed alternatives. Alternative versions of the system can include an alphanumeric keyboard coupled to the onboard computer.

Referring to FIGS. **2A-C**, an integrated I/O device **241** includes display **242** and a set of four rocker switches that are part of input device **244**. One rocker switch is dedicated to "menu" and "cancel" inputs while the other three are reconfigurable. Referring to FIG. **2A**, display **242** is at times used to display both text commands and graphical representations of commands. Referring to FIGS. **2B-C**, display **242** is used at times to provide visual feedback to the operator when inputting information. FIG. **2B** illustrates selection from a list and FIG. **2C** illustrates spelled input in which the operator uses the rotary switch to select letters to spell an input word.

Referring back to FIG. **2**, I/O devices **240** also include a voice output device **246**. Voice output device **246** provides audio output of speech commands that are stored or formed on onboard computer, for example, using compressed or concatenated waveforms or a speech synthesizer.

I/O devices **240** can be dedicated to onboard computer **210**, or can alternatively be part of another vehicle component such as a radio. In the latter case, display **242** and input device **244** are the display and input buttons of the other component, respectively. Many audio components include standard control interfaces, such as the ACP (Audio Control Protocol) interface used in vehicles manufactured by the Ford Motor Company. In such a case, onboard computer **210** can communicate with the audio component using a standard communication interface. Voice output can be provided to the operator by passing it through the audio system, or alternatively, onboard computer **210** can mute or attenuate the audio system while voice output is provided through a dedicated audio path.

Referring still to FIG. **2**, communication system **250** includes a GPS receiver **252** coupled to a GPS antenna **253** for receiving signals from GPS satellites **140.** GPS receiver **252** repeatedly provides location-related information to onboard computer **210**, for example, at one-second intervals. The location related information can be an estimated location, in terms of latitude and longitude, or other raw measurements that can be used to compute an estimated location. GPS receiver **252** can also receive correction data from onboard computer **210**, which it uses to compute increased accuracy location estimates from its raw measurements. As is described further below, the correction data can be provided by server system **125** and is used at times to increase the accuracy of the location information provided by GPS receiver **252**.

Communication system **250** also includes a cellular transceiver **254** coupled to a cellular telephone antenna **255**. Cellular transceiver **254** provides voice and data communication capabilities to the vehicle. A modem **256** is coupled between onboard computer **210** and cellular transceiver **254**. Data sent to and received from server system **125** over a cellular telephone line passes through modem **256**. Cellular transceiver **254** is also coupled to a handset **260**. The operator can place standard telephone calls using handset **260** when cellular transceiver **254** is not being used to communicate with server system **125**.

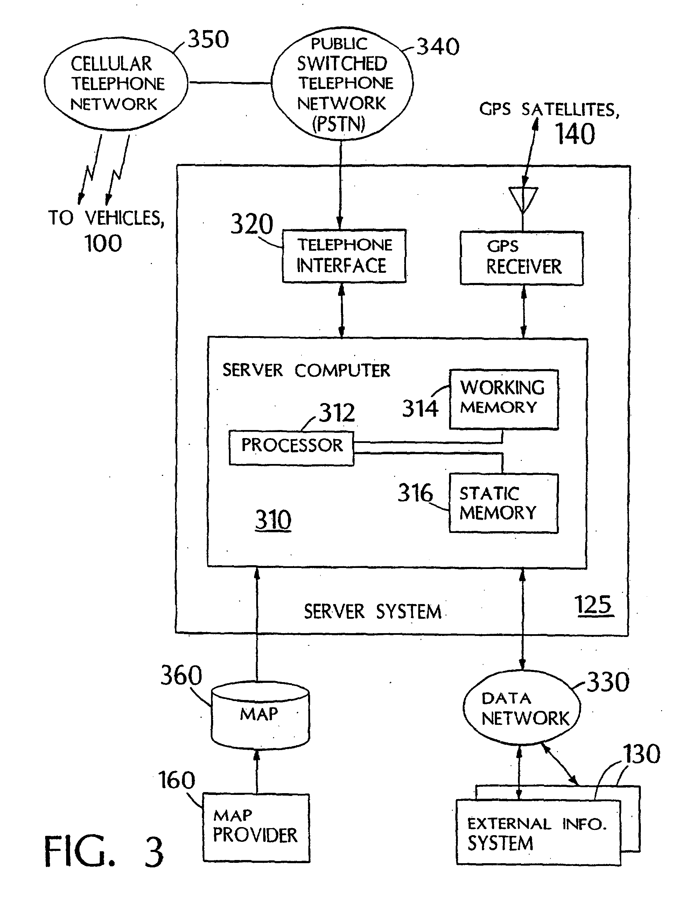

### 2.2 Server System Components (FIG. 3)

Referring to FIG. **3**, server system **125** includes a server computer **310**, which communicates with in-vehicle systems **105**. Server system **125125** includes a telephone interface **320** for receiving and placing telephone calls to establish data communication sessions with individual in-vehicle systems **105**.

An in-vehicle system **105** initiates a communication session with server system **125** by placing a cellular telephone call to a telephone number associated with the server system. The call is routed through a cellular telephone network **350** to public switched telephone network (PSTN) **340** and then to telephone interface **320**. Telephone interface **320** answers the call. Telephone interface includes a modem function which is used to establish a data connection with modem **256** (FIG. **2**) in the calling vehicle. In alternative versions of the system, telephone interface **320** may be coupled directly to cellular telephone network **350**. Also, the data signal may be demodulated prior to reaching the server system, for example, in the telephone network itself.

The server system can similarly establish a data communication session with a particular vehicle by placing a telephone call to the telephone number associated with that vehicle. Cellular transceiver **254** (FIG. **2**) determines whether the inbound call is a data call from the server system or a voice call intended for voice communication with the operator of the vehicle. A data call is connected to modem **256** (FIG. **2**) providing a data connection between telephone interface **320** and modem **256**.

Server system **125** also includes a GPS receiver **325**. GPS receiver **325** receives signals from GPS satellites **140**. Server system **125**, which is at the known location of centralized server **120**, does not rely on GPS receiver **325** to determine its location. Rather, server computer **310** provides its known location (i.e., latitude and longitude) to GPS receiver **325**. Using the satellite signals and the known location of the server, GPS receiver **325** provides in return GPS correction data, for instance, "differential" pseudorange correction data provided according to the Radio Technical Commission for Maritime Services (RTCM) standard RTCM SC-104. This correction data is used to improve the locations estimates of vehicles **100**, as is described more fully in Section 2.4.

Server computer **310** includes a processor **312**, working memory **314**, and static storage **316**. Static memory **316** includes storage for map-related information that is used by the server system in computing routes.

Server computer is coupled to external information systems **130**. For instance, external information systems can be other computers coupled to server system **125** over a data network **330**, such as the Internet.

Server system **125** receives map information from map provider **160** on a removable computer medium **360**, such as a optical disk (e.g., CD-ROM). Server computer **310** reads this map data and stores a processed form of the map information in static memory **316** for further use. Alternatively, map provider **160** can provide the map information to the server system in some other way, for example by passing it to the server system over data network **330.**

### 2.3 Map Database

The in-vehicle and server systems make use of data derived from map information furnished by map provider **160** on computer medium **360** (FIG. **3**). The raw map information furnished by map provider **160** includes various types of information related to the road network for a particular geographic region, such as a portion of the United States. Within this region, the information includes a representation of the road network as a graph as illustrated in FIG. **7**. Links in the graph correspond to segments of the road network, for example, a segment of a street between two intersections. Nodes in the graph correspond to intersections or other points at which two or more links join. Nodes that couple only two links are used, for example, as "shape points" when a single roadway makes a turn. This allows roadway to be well approximated by sequences of straight segments.

The map information includes the locations of nodes in the graph, in terms equivalent to their latitude and longitude. The map information also includes link information, including associations of street names and links, and ranges of street numbers on links. Links are also categorized according to their size ranging from small residential streets to interstate highways.

An example of a map provider for this system is Navigational Technologies Inc. (NavTech) of Rosemont, Illinois. The map information is provided in one of a number of interchange formats, such as in the Geographic Data File (GDF) format, an international standard format. A map in GDF format includes a data structure which associates links and nodes and their attributes, and relationships between nodes and links in the graph. NavTech provides maps in which road links are categorized by classes from 0 to 4, with 0 for residential (side) streets, 1 for main streets, 2 for arterial roads, 3 for freeways, and 4 for interstate highways.

In alternative versions of the system, other forms of map information that can be converted to a link and node representation of a road network can alternatively be used.

### 2.4 GPS and DGPS Correction

As outlined above, both the in-vehicle and server systems include GPS receivers. GPS positioning uses the ranges to multiple satellites that are in precisely known orbits around the earth. A constellation of approximately 24 satellites is in such known earth orbits. A receiver at any point on or near the surface of the earth is typically in range of a subset of three or more of the satellites. A GPS receiver determines an estimate of its distance or range (a pseudorange measurement) to each of the subset of in-range satellites. It then computes its three-dimensional coordinates with reference to the known coordinates of each of the subset of satellites to which it determined pseudorange measurements. Based on straightforward geometric consideration (i.e., intersections of spheres) four pseudorange measurements are sufficient to uniquely determine the coordinates of the receiver. Three measurements are sufficient to determine that the receiver is at one of two possible points, and typically, only one of the points is reasonable (e.g., it is on the surface of the earth rather than in outer space). Using three pseudorange measurements, a GPS receiver can determine a two-dimensional location on the surface of the earth with an accuracy of approximately 100 meters.

The pseudorange measurements are not, however, completely accurate measurements of the distance from the receiver to the satellites due to several factors. First, signal propagation speed from a satellite to a GPS receiver can vary due to variations in atmospheric conditions. Also, the transmitted signals are intentionally manipulated by introducing varying time delay at the transmitter in order to limit the accuracy of location estimates based solely on the pseudorange measurements at the receiver.

As a method of overcoming the inaccuracies in the pseudorange measurements, differential GPS (DGPS) is used. Differential GPS is based on receiving signals from GPS satellites at a receiver that is at a known location. The difference between a pseudorange measurement from a satellite to that receiver and a computed distance between the location of the satellite and the location of the receiver is a pseudorange correction term for that satellite. Separate pseudorange correction terms are computed for each.satellite. To the extent that propagation is slowly varying and the intentionally introduced delays are also slowly varying, a pseudorange correction term for a satellite can be used to correct further pseudorange measurements from that satellite for a short period of time relative to the rates of variation, for example for one minute. Also, to the extent that variations in propagation speed are not geographically local, a pseudorange correction term can be applied at a GPS receiver that is at a different location than the GPS receiver at which the correction term was computed.

In the vehicle information system, three approaches. to differential GPS correction are used. A first approach is generally known as "inverted DGPS." In this approach, an in-vehicle system sends the pseudorange measurements, or other raw GPS data that is related to the pseudorange measurements, that it obtains from its GPS receiver to the server system over the cellular telephone link. The server system applies the differential correction terms it previously obtained from its own GPS receiver to the received pseudorange measurements it receives from the in-vehicle system and the server system calculates a corrected location for the vehicle.

In a second approach to GPS location estimation, the server system transmits pseudorange correction data to an in-vehicle system. The in-vehicle system provides the received correction data to its GPS receiver which then outputs improved location estimates based on its raw pseudorange measurements and the pseudorange correction data.

A third way that differential GPS is used in the system is for an in-vehicle system to determine its own pseudorange correction data based on its own location estimate. For instance, when an in-vehicle system detects that the vehicle is at a known maneuver point along a planned route, it computes the pseudorange correction data based on the downloaded location of the maneuver point. The differential correction data is then used for a period of time after the maneuver point is passed.

An alternative mode of correction of GPS location estimates computed by the in-vehicle system uses correction data in terms of differences in latitude and longitude rather than differences in pseudorange measurements. For instance, the server system can provide GPS correction data that includes an offset in latitude and in longitude that the in-vehicle system adds to the latitude and longitude location estimates output from its GPS receiver. If this type of GPS correction is used, the in-vehicle GPS receiver does not have to have a differential GPS capability since the location correction is performed on the output of the GPS receiver, rather than as part of the process of computing a location estimate in the GPS receiver.

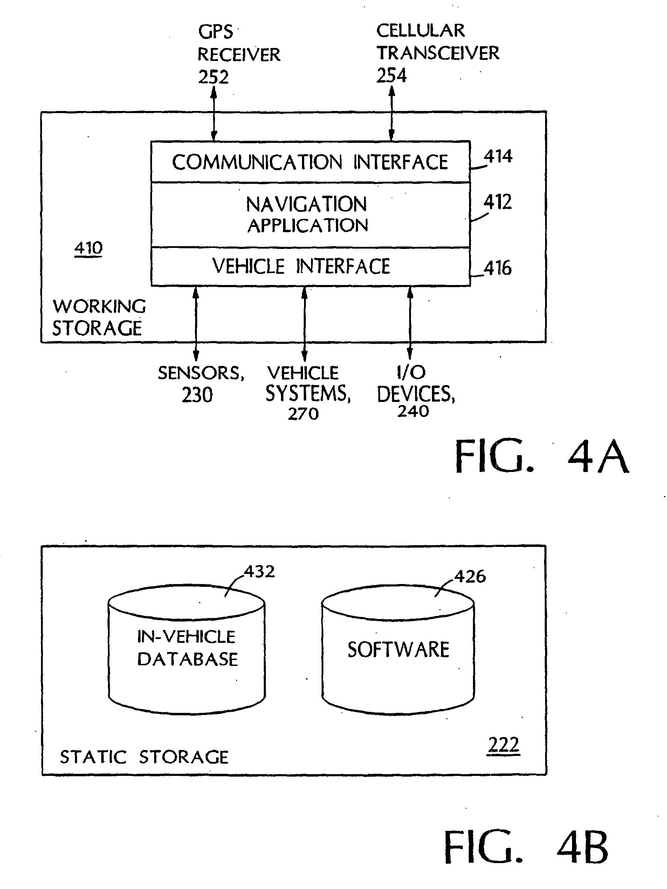

### 2.5 In-Vehicle Software Components (FIGS. 4A-B)

Referring to FIGS. **4A-B**, software components of in-vehicle system **105** which execute on onboard computer **210** (FIG. **2**) include relatively static data stored in static storage **222**, and code stored in working storage **410**, which is made up of some combination of DRAM **220** and EPROM **218** shown in FIG. **2**.

Static data includes in-vehicle database **432** and software **436**. Code in working storage **410** includes a navigation application **412**, a communication interface **414**, and a vehicle interface **416**. Communication interface **414** provides an interface between navigation application **412** and GPS receiver **252** and cellular transceiver **254**. Vehicle interface **416** provides an interface between navigation application **412** and sensors **230**, vehicle systems **270**, and I/O devices **240**.

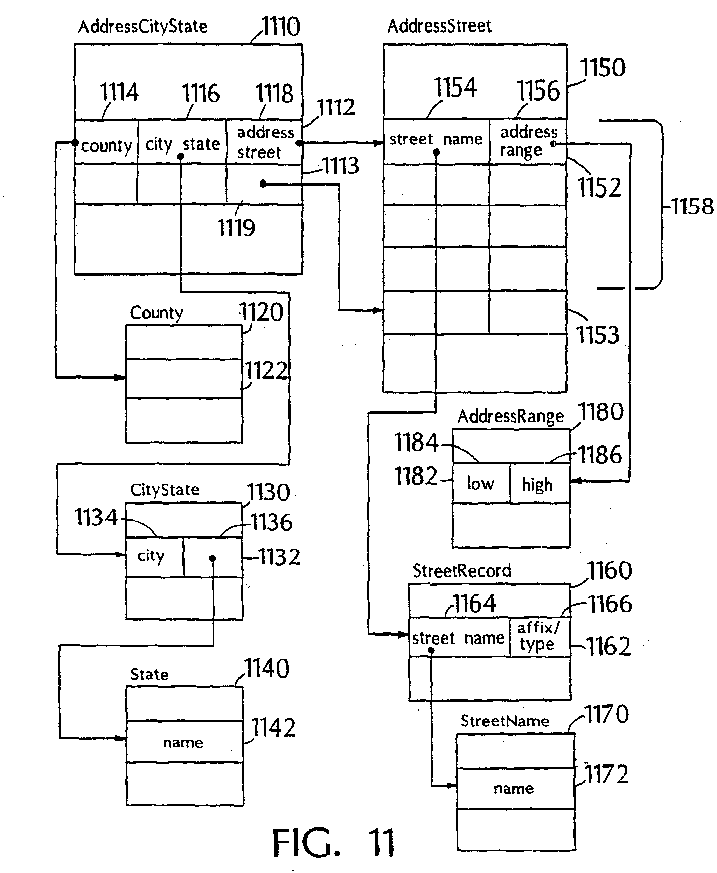

### 2.5.1 In-Vehicle Database 432 (FIGS. 11-14)

In-vehicle database **432** is used by in-vehicle system **105** for two principle functions. First, in-vehicle system **105** uses in-vehicle database **432** in the destination specification phase in which the database is used to determine alternatives to present to the operator, and to validate inputs from the operator. Second, in-vehicle system **105** uses in-vehicle database **432** during the guidance phase when the in-vehicle system detects that the vehicle is off route and it must plan a new route.

For the destination entry phase, database **432** includes tables that are used by the in-vehicle system to determine the names of known cities, the street names of streets in those cities (including residential, or side, streets), and the valid street address numbers on those streets. The database also includes tables that specify types of points of interest, and the points of interest of a particular type near a vehicle's location or in a particular city.

For the guidance phase, database **432** includes additional tables that the in-vehicle system uses to plan a route from a determined location (latitude and longitude) to a desired destination or an intermediate point on a previously planned route. For instance, the main roads network **1000** (FIG. **10**) is stored in data tables in in-vehicle database **432**.

Referring to FIG. **11**, an *AddressCityState* table **1110** in in-vehicle database **432** includes a series of records that associate (Country,State,City) combinations with a series of (Street,Address Range) combinations. A typical record **1112** in *AddressCityState* table **1110** includes a *Country* field **1114** that references the name of a country in a *Country* table **1120.** *Country* table **1120** holds the text representations of the names of known countries, such as "United States" or "Canada." Record **1112** also has a *CityState* field **1116** which is a reference to a *CityState* table **1130** that is used to determine the text representation of a city and state in the country referenced by *Country* field **1114**. Record **1112** also includes an *AddressStreet* field **1118** that references the first of a range of records **1158** in an *AddressStreet* table **1150**. Directly after record **1112** in *AddressCityState* table **1110,** a record **1113** includes an AddressStreet field **1119** that references the next record **1153** after range **1158**, thereby defining the records in range **1158**.

Each record in *AddressStreet* table **1150** is associated with a combination of a complete street name, and a range of valid street numbers for that street name. Multiple records in *AddressStreet* table **1150** can refer to the same street name in order to build up an entire range of valid street numbers. A typical record **1152** in *AddressStreet* table **1150** includes a *Streetname* field **1154** and an *AddressRange* field **1156.** *Streetname* field **1154** references a record in a *StreetRecord* table **1160** that is used to form the text representation of the street name. *AddressRange* field **1156** references a record **1182** in *AddressRange* table **1180** that includes entries for the lowest **1184** and highest **1186** numerical values in a valid range of the street numbers for the associate street.

*StreetRecord* table **1160** is used to form completely specified street names in terms of base street names, optional prefixes and suffixes, and street types. For instance, "North Main Blvd" is represented by the base street name "Main," the prefix/suffix combination "North/-" and the street type "Blvd." A typical record **1162** in *StreetRecord* table **1160** includes a *StreetName* field **1164** that references the text form of the base street name stored in a *StreetName* table **1170**, and an *AffixType* field **1166** that includes a representation of the prefix/suffix combination as an index to the predetermined set of prefix/suffix combinations and a text representation of the street type.

Referring back to record **1112** in *AddressCityState* table **1110**, *CityState* field **1116** references a record **1132** in *CityState* table **1130**. Record **1132** includes a City field **1134** that encodes the text representation of the name of the city, and a State field **1136** that references a record **1142** in a State table **1140** that encodes the name of the state.

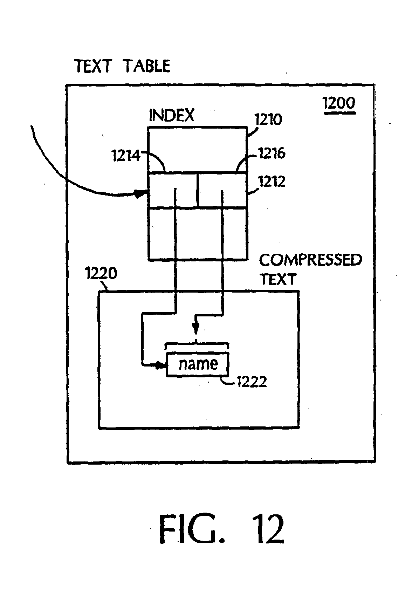

Several tables shown in FIG. **11** store lists of text names. These include *Country* table **1120**, *StreetName* table **1170**, State table **1140**, and *City-state* table **1130**. In FIG. **11**, references to records are shown as providing a direct access to the stored text representations. Referring to FIG. **12**, a representative text table **1200** includes an index **1210** and a compressed text region **1220**. A reference to a particular record is used as an offset to a record **1212** in index **1210.** Record **1212** includes a starting field **1214** and a length field **1216**. Compressed text **1220** includes the concatenation of all the text records, encoded as a sequence of 6-bit character representation. Starting field **1214** is the index of the starting 6-bit character of the record. In order for a procedure executing on onboard computer **210** to access the text string, the procedure first converts the index to the address of the starting 8-bit byte of storage, and then it unpacks the 6-bit character representation to form a standard 8-bit character representation of the record.

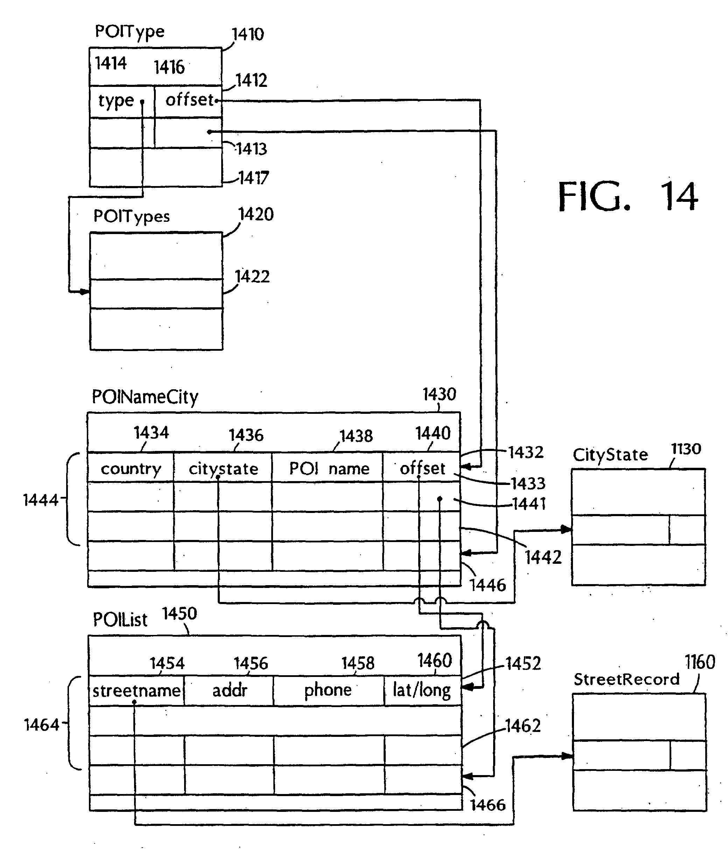

Referring to FIG. **14**, an additional set of tables supports entry of a destination in terms of a "point of interest" (POI). Points of interest are divided by type, such as "restaurants," "ATM machines," and "gas stations." A *POIType* table **1410** includes a sequence of records. A typical record **1412** in *POIType* table **1410** includes a Type field **1414** that references a record **1422** in a *POITypes* table **1420**. Record **1422** is a text representation of the type of POI.

Record **1412** of *POIType* table **1410** includes an *Offset* field **1416** that references a first record **1432** of a range **1444** of records in a *POINameCity* table **1430**. An *Offset* field **1417** of a record **1413** that immediately follows record **1412** in *POIType* table **1410** references a record **1446** in *POINameCity* table **1430** that immediately follows range **1444** of records in *POIType* table **1410**.

Record **1432** in *POINameCity* table **1430** includes a *Country* field **1434**, which references a record in *Country* table **1120** (FIG. **11**), a *CityState* field **1436**, which references a record in *CityState* table **1130**, a POIName filed **1438**, and an Offset field **1440**, which references a record **1452 in** a *POIList* table **1450** which is the first record in a range **1464** of records in *POIList* table **1450** associated with record **1432**. An *Offset* field **1440** of a record **1433** that immediately follows record **1432** in *POINameCity* table **1430** references a record **1466** that immediately follows range **1464** in *POIList* table **1450**.

Record **1452** in *POIList* table **1450** includes a *StreetName* field **1454**, which references a record in *StreetRecord* table **1160**, an Address field **1456** that encodes the street number associated with the address of the point of interest, a *PhoneNumber* field **1458** which encodes the telephone number of, the point of interest, and a *Latitude*/*Longitude* field **1460** which encodes the latitude and longitude of the point of interest.

Additional tables are included in in-vehicle database **432** to support other forms of destination specification. In versions of the system that support destination specification in terms of a "Yellow Pages" (telephone directory) category, in-vehicle database **432** includes a text table of "Yellow Pages" categories. In versions of system that support destination specification in terms of a pair of intersecting roads, a table of valid cross-street combinations is included in in-vehicle database **432**. If a table of cross-street combinations is included, the table can alternatively include only intersections of main streets, or additionally include intersections of main streets and smaller residential streets, or even intersections of pairs of residential streets, if sufficient storage is available in the in-vehicle system.

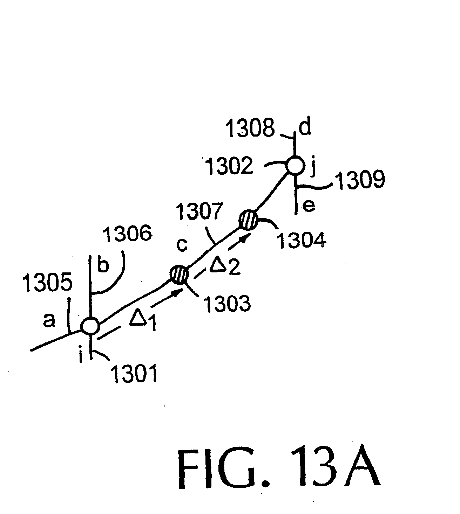

Additional tables in in-vehicle database **432** (FIG. **4**) are used during the guidance phase when the vehicle is determined to be off route. In particular, these tables encode main roads network **1000** (FIG. **10**). Referring to FIG. **13A**, a representative link of main roads network **1000** joins a node *i* **1301** and a node *j* **1302**. Link *c* **1307** joins nodes i **1301** and j **1302**. Link c **1307** includes two shape points **1303** and **1303**. Node *i* **1301** is also connected to links *a* **1305** and *b* **1306** and node *j* **1302** is also connected to links *d* **1308** and *e* **1309**.

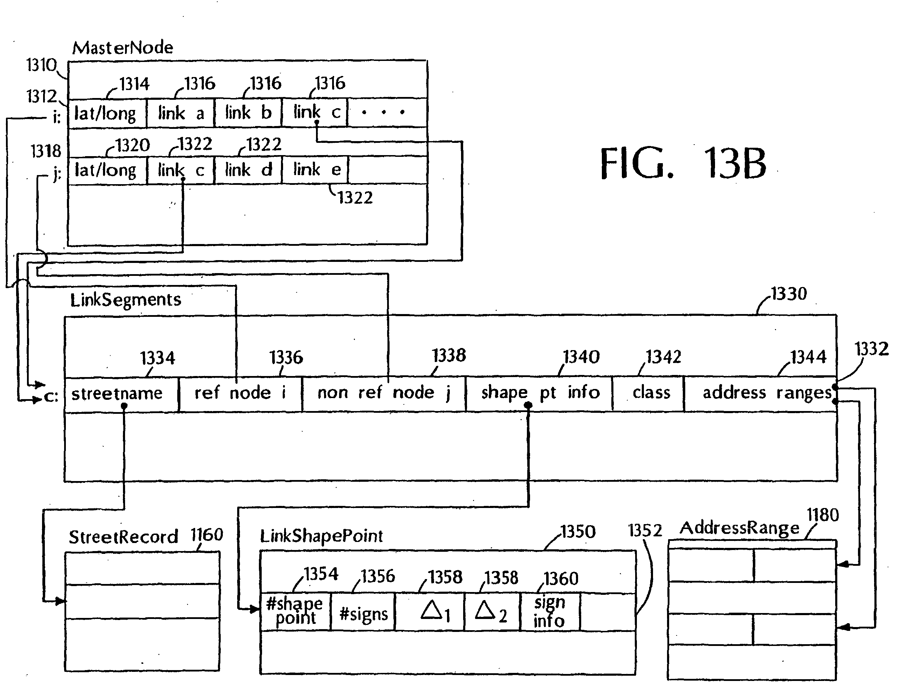

Referring to FIG. **13B**, several tables are used to represent the main roads network **1000**. Records in these tables related to the representative link shown in FIG. **13A** are illustrated in FIG. **13B**. A *MasterNode* table **1310** includes one logically variable length record for each node in the network. A record **1312** which is associated with node *i* **1301** includes a *Latitude*/*Longitude* field **1314** that encodes the location of node *i* **1301.** Record **1312** also includes a set of link fields **1316**, one for each of the links joined at node *i* **1301**. Each link field **1316** includes information related to allowable turns from that link onto other links at that node, and includes a reference to a record in a *LinkSegments* table **1330** associated with that link. For instance, the link field **1316** associated with link *c* **1307** references record **1332** in *LinkSegments* table **1330.**

Record **1332** in *LinkSegments* table **1330** includes a *StreetName* field **1334**, which references a record in *StreetRecord* table **1160**, and a reference node field **1336** and a non-reference node field **1338** which reference records **1312** and **1318** in MasterNode table **1310**, respectively. Record **1332** also includes a *ShapePointInfo* field **1340** which references a record **1352** in a *LinkShapePoint* table **1350**. The record referenced by *ShapePointInfo* field **1340** includes information related to the shape points on the link, as well as information related to signs on the link. Record **1332** also includes a *Class* field **1342**, which encodes the road class of the link, and an *AddressRanges* field **1344**, which references two records in *AddressRange* table **1180**, one for each side of the road.

Record **1352** in *LinkShapePoint* table **1350** includes a *NumberShapePoints* field **1354** and a *NumberSigns* field **1356**. For each shape point, record **1352** includes an encoding of the change in latitude and longitude from the previous shape point, or from the reference node for the first shape point. Record **1352** also includes *SignInformation* **1360** describing the signs that would be seen by someone driving along the link.

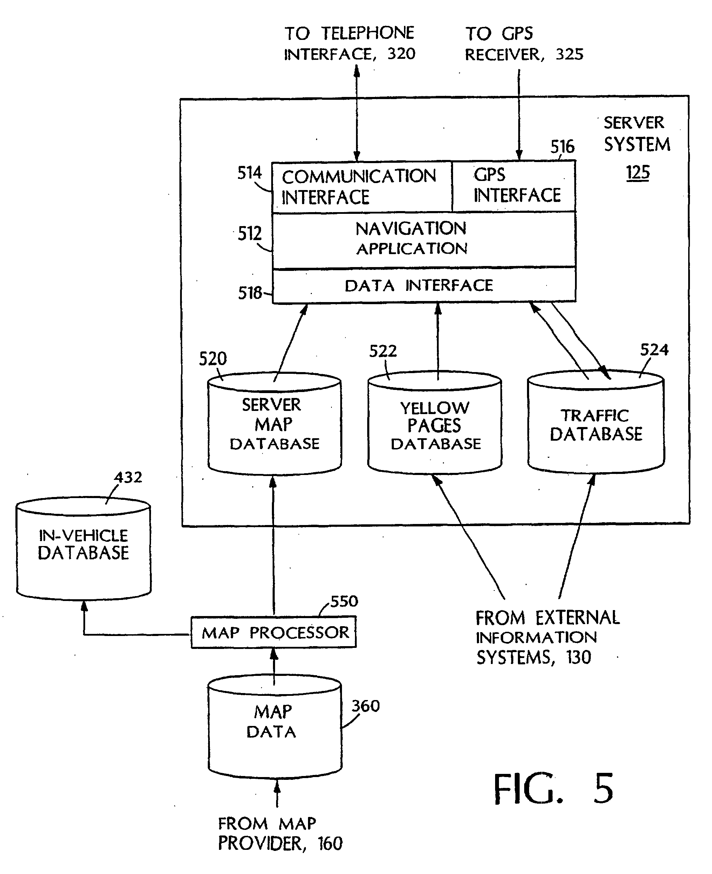

### 2.6 Server Software Components (FIG. 5)

Referring to FIG. **5**, server system **125** includes software that executes on server computer **310** (FIG. **3**). This software includes a navigation application **512**, which is used to interact with the in-vehicle systems. Navigation application **512** is coupled to a communication interface **514**, which is used to communicate with telephone interface **320** (FIG. **3**). Navigation application is also coupled to a GPS interface **516** that is coupled to GPS receiver **325** (FIG. **3**).

Navigation application **512** also makes use of a number of databases that it accesses through a data interface **518.** Server system **125** includes a server map database **520** that includes the complete road network **700** (FIG. **7**). This database is derived from map information **360** provided from map provider **160**. The map information is processed by a map processor **550** that reformats the map information to form server map database **520**. The same map information is used to derive the map information that is stored in the in-vehicle databases **432** in the vehicles. Map processor **550** can be implemented as a software module that executes on server computer **310**, or can alternatively execute on some other computer allocated to the reformatting task. By deriving both the server map database and the in-vehicle map database from the same map information, consistency between the in-vehicle and the server data is guaranteed.

Navigation application **512** also makes use of a yellow pages database **522** that it uses to convert the telephone number of a desired destination to a street address in a "reverse" number lookup. The information needed to construct yellow pages database **522** is provided by an external information system **130**, such as a telephone company or a publisher of telephone directories.

Navigation application **512** also makes use of a traffic database **524**. Information in traffic database **524** includes typical link speeds that it uses for route planning. The information comes from a combination of an external information system **130**, such as from a government run traffic monitoring authority, and from logging data obtained from probe vehicles (see Section 3.5). If probe vehicles are used to collect traffic information, then traffic information can also be provided by the server system to the external traffic information system.

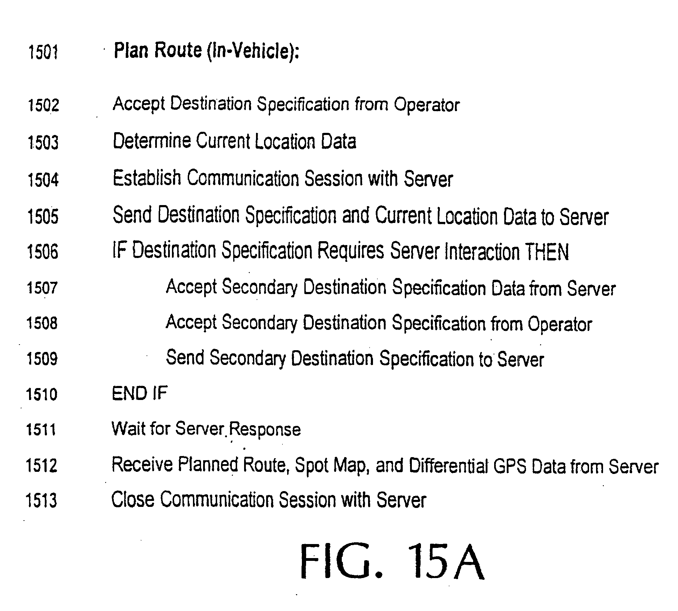

### 3 SYSTEM OPERATION FIGS. 15A-B AND 16-18

### 3.1 General Procedure

System operation involves cooperation between in-vehicle system **105** and server system **125** (see FIG. **1**). The procedure followed from the time at which an operator of a vehicle begins specifying a destination to the time at which the vehicle reaches the specified destination is illustrated in the pseudocode listing in FIGS. **15A-B** and **16-18**.

Referring to FIG. **15A**, the procedure followed by in-vehicle system **105** (FIGS. **1,2**) from the time at which the operator begins specifying the desired destination to the time that the in-vehicle system can begin guiding the operator to the destination shown. The in-vehicle system first accepts a destination specification from the operator (line **1502**). This can take several separate interactions with the operator, for instance the operator selecting a city, then a street, and then a street number. Various types of destination specification procedures are supported by the system, as described further below (see Section 3.2.1)

The in-vehicle system also determines the vehicle's initial location or data related to the vehicle's initial location, and in some versions of the system the orientation of the vehicle (line **1503**). The location or location-related data includes one or more of (a) a GPS location estimate or pseudorange measurements obtained at the time that the navigation request is being made, (b) past GPS-based location estimates, and (c) dead-reckoning from previous GPS-based location estimates or from maneuver locations. Starting location estimation is discussed further below (see Section 3.2.2)

After having accepted the destination specification from the operator, and location data related to the vehicle's current location, the in-vehicle system establishes a communication session with the server system (line **1504**). The in-vehicle system establishes the communication session by making a cellular telephone call to the server system and then establishing a data communication session with the server system using its modem.

The in-vehicle system then sends the location data and the destination specification to the server system (line **1505**).

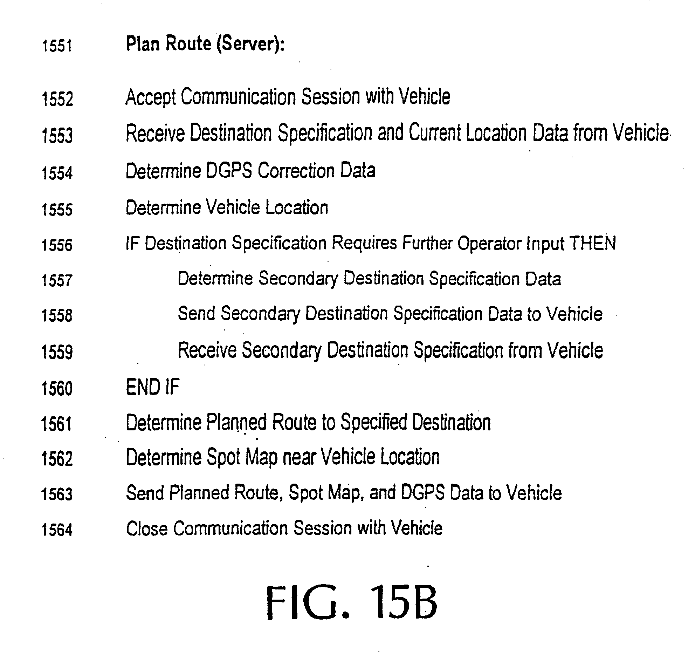

Referring now to FIG. **15B**, the server system accepts the communication session from the vehicle (line 1552) and receives the location data and the destination specification (line **1553**).

The server system receives signals from multiple GPS satellites **140** and computes GPS correction data for each of the satellites (line **1554**). The server system then determines the vehicle's location (line **1555**). In determining the vehicle's location, if the in-vehicle system provided raw GPS data, such as pseudorange measurements to GPS satellites **140**, the server system applies the GPS correction data it has computed to the raw GPS data that the vehicle provided to compute the vehicle's location.

In alternative versions of the server system, the server's GPS receiver (or at least its GPS antenna) is not necessarily located at the centralized server. For instance, the centralized server can be some distance from the vehicles. The GPS receiver and antenna are located nearer to the vehicles than the centralized server. This makes the GPS correction data more accurate since the server system's GPS receiver is then closer to the vehicles at which the GPS location estimates are being estimated. Also, a server system can have multiple GPS receivers in different locations. The server system then chooses the closest GPS receiver to a vehicle for which it is providing correction data. In this way, a single server system can service vehicles in a wide geographic area over which common GPS correction data may not be effective due geographic variations in the correction terms.

For certain types of received destination specifications, and in particular, a destination specification in terms of a class of "yellow pages" categories, the destination is not fully specified at this point. If this is the case (line **1556**) then further operator input may be required in response to secondary specification data provided by the server system. The server system sends the secondary data to the vehicle (line **1557**). For instance, if the operator specified the destination in terms of a yellow pages category, the server system provides secondary data with the specific listings in that category that are near the vehicle's location.

Referring back to FIG. **15A**, the in-vehicle system accepts the secondary destination specification data (line **1507**). Using this data, the in-vehicle system presents the data to the operator and accepts a secondary destination specification from the operator, for instance as a choice from the list of destinations defined in the secondary specification data. The secondary destination specification is sent to the server (line **1509**). At this point, the server system has a completely specified destination.

Turning back to FIG. **15B**, the server system now determines a route (see Section 3.2.4) from the vehicle's location to the specified destination (line **1561**). The server system also determines a spot map around the vehicle's location that it will download to the vehicle (line **1562**). The server system also determines whether to download spot maps around maneuver points, for instance, based on the complexity of the maneuvers, and determines the spot maps around those maneuver points.

The server system sends the planned route, the spot map, and the GPS correction data to the in-vehicle system (line **1563**).

Referring back to FIG. **15A**, the in-vehicle system receives the planned route, spot map, and GPS correction data from the server system (line **1512**) and closes the communication session with the server (line **1513**).

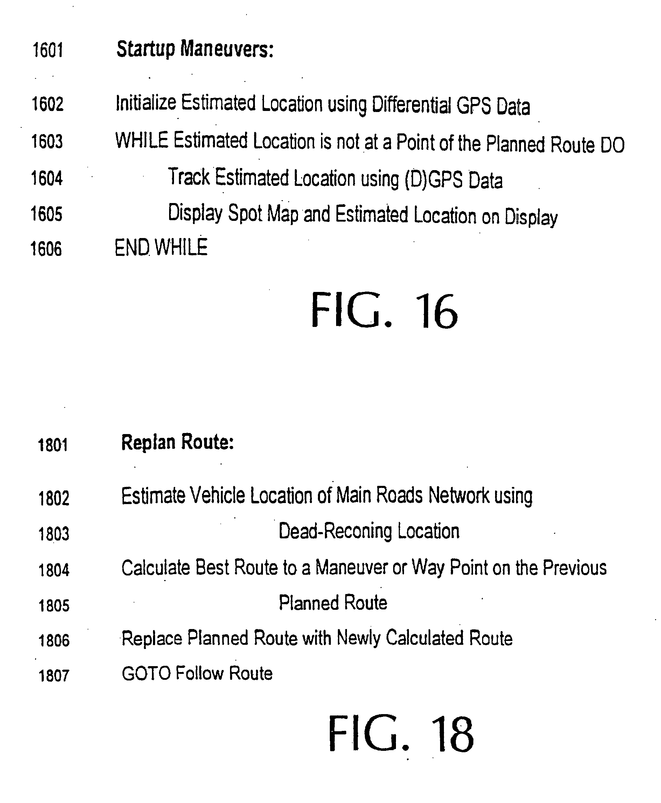

Referring now to FIG. **16**, the vehicle is now prepared to guide the operator in a startup maneuver from its initial location onto the planned route. First, the in-vehicle system initializes its estimated location. The server system provided GPS correction data that the in-vehicle system provides to its GPS receiver in order to increase the accuracy of the location estimates provided by its GPS receiver. The GPS correction data that the server system provided is only valid for a short time. After an interval of approximately one minute from the time the GPS correction data was obtained by the server system from its GPS receiver, the in-vehicle system stops using the correction data and uses standard GPS instead. As is discussed further below, GPS correction data may be obtained at other times during a trip, and in such cases, the in-vehicle system provides the correction data to its GPS receiver for a fixed interval from the time that the data was generated by a GPS receiver.

During the startup maneuver, which is the initial portion of the trip until the vehicle is following the planed route, the in-vehicle system tracks the location of the vehicle using the differential GPS location estimates until the GPS correction data is too old, and then tracks the vehicle using uncorrected GPS location estimates (line **1604**). The in-vehicle system displays the spot map along with an indication of the vehicle's estimated location and a representation of the planned route (line **1605**). When the in-vehicle system detects that the vehicle is following the planned route, the startup maneuver phase is completed and a turn-by-turn route following phase begins.

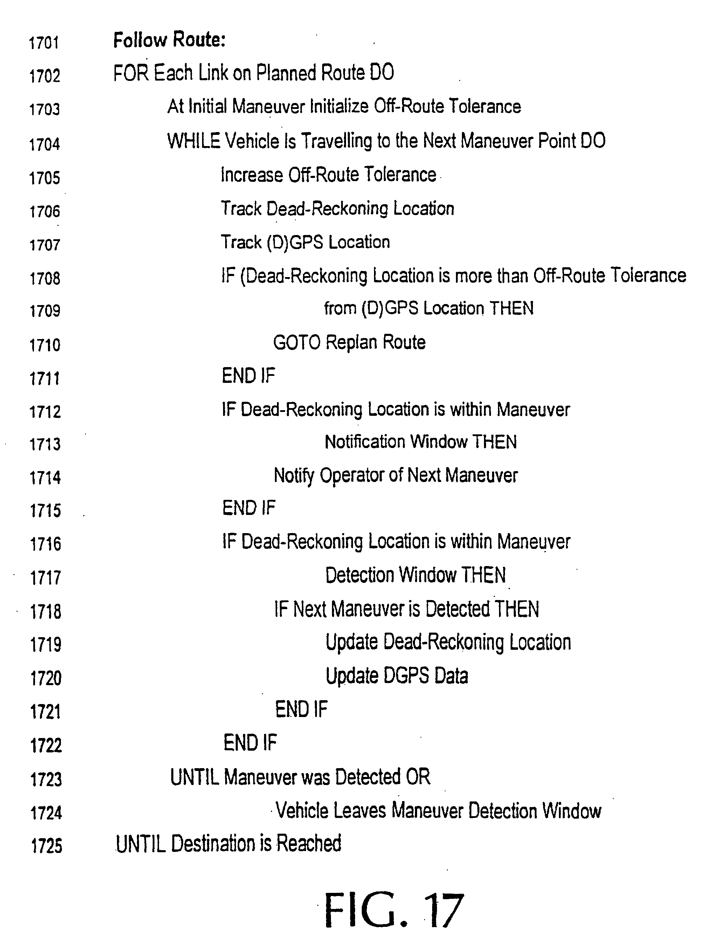

Referring now to FIG. **17**, the route following procedure is based on notifying the operator of each of the links along a planned route. While traveling_along the route, the in-vehicle system maintains two location estimates for the vehicle. The first is based on GPS estimates, or on DGPS estimates if current GPS correction data is available. The second location estimate is based on a "dead reckoning" procedure. This procedure assumes that the vehicle is properly following the planned route. The dead reckoning uses the locations of the maneuver and way points along the planned route and information from the vehicle sensors, in particular, from the velocity sensor, to update this second location estimate. If the vehicle is truly following the route, then the two location estimates should remain close to one another. Note that this dead reckoning procedure does not need to use heading estimates to track the vehicle's position since the vehicle is assumed to be traveling along the planned route.

Along each link, after the initial maneuver at the starting node of the link, the in-vehicle system initializes an off-route tolerance. This tolerance is the allowable disparity between the GPS and the dead reckoning location estimates. The tolerance grows from an initial value established right after a maneuver to account for a growing inaccuracy in the estimates, due, for instance, to calibration inaccuracies in the velocity sensor and aging of the GPS correction data. The off-route tolerance is initialized to 150 feet and grows linearly to a maximum of 500 feet at a rate of about 1 foot per 100 feet traveled.

While traveling to the next maneuver point (loop starting at line **1704**), the vehicle increases the off route tolerance (line **1705**), tracks its dead reckoning position (line **1706**), and tracks its GPS or DGPS position (line **1707**) (depending of whether current GPS correction data is available).

If at any time the difference between the dead reckoning position and the (D)GPS based position is more than the off-route tolerance, then a off-route routine is initiated (line **1710**).

While traveling along a link, the vehicle eventually reaches a point near the next maneuver. When the vehicle is estimated to be within a distance window of the next maneuver, then the operator is notified by the in-vehicle system using graphical and aural output of the upcoming maneuver. The size of the notification window depends on the road class being traveled on, which is related to the time prior to a maneuver that an operator is notified of the maneuver. For instance, on a highway, an operator is notified of a maneuver, such as exit from the highway, at a farther distance from the maneuver that the distance than from a maneuver in a residential neighborhood.

Also while traveling along the link, the in-vehicle system attempts to detect the precise point at which the next maneuver is carried out. When the vehicle is within a distance window of the next maneuver, the in-vehicle system attempts to detect the maneuver. For instance, if the maneuver involves making a right angle turn, the signals from the in-vehicle sensors, such as from a magnetic compass or a rate gyroscope, or from successive GPS location estimates from which changes in directions are detected, provide a clear indication of the maneuver point.

If a maneuver is detected (line **1718**) then the in-vehicle system updates its dead reckoning location estimate based on the location of the maneuver (line **1719**). Also, the in-vehicle system uses the downloaded location of the maneuver point to compute its own GPS correction data (line **1720**). In particular, the in-vehicle system computes the deviation in latitude and longitude at the maneuver point and applies these deviations as corrections to the latitude and longitude position estimates output from its GPS receiver for a one minute interval after the maneuver. Alternatively, the in-vehicle system uses the location of the maneuver point and the pseudorange measurements obtained by the vehicle's GPS receiver at the time of the detected maneuver to compute new GPS correction data that are used for a one minute interval after the maneuver.

Note that there are times when a maneuver is not detected, for instance if it involves only a slight turn that is not accurately detected using the vehicle sensors. In such a case, the in-vehicle system continues the dead reckoning procedure under the assumption that the vehicle has stayed on route. Such maneuver points that are not detected are essentially treated in the same way as way points from the point of view of tracking the dead reckoning location of the vehicle.

The route following procedure continues from link to link along the route until the destination is reached (line **1725**).

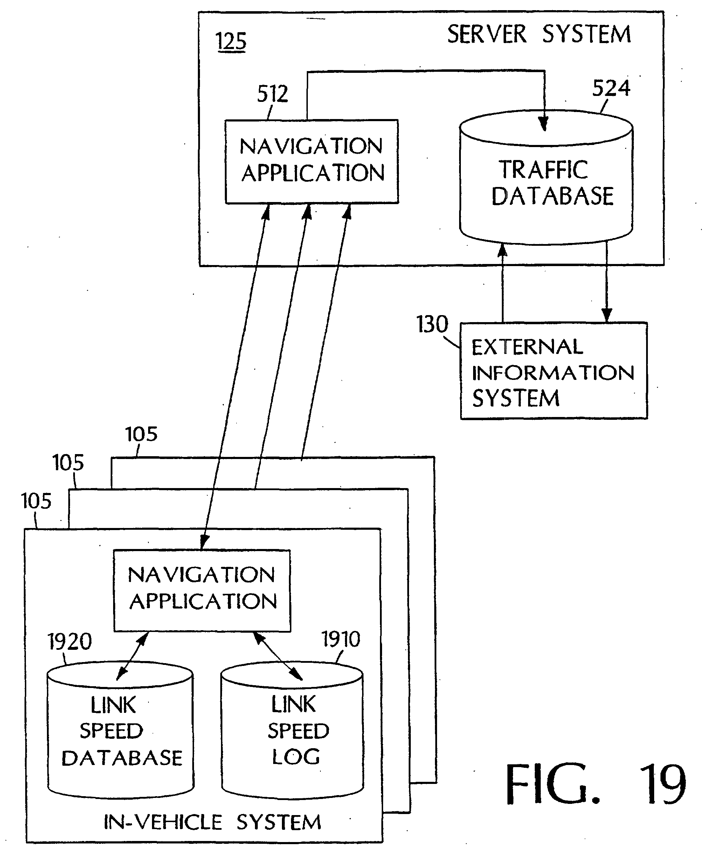

Referring now to FIG. **18**, the off-route routine first involves a dead-reckoning position correction procedure (lines **1802-1810**). If for the direction of travel matches the planned route for an interval, for instance, of 75 feet after the difference between the position estimates was detected, then the dead reckoning position is updated to be the closest point along the planned route to the (D)GPS position estimate (lines **1804-1805**). In this way, if the deviation in position estimates is due to inaccurate tracking of the distance along the route, the location correction procedure should successfully overcome the error. If the deviation between the (D)GPS estimate and the dead-reckoning estimate is now less than the off-route tolerance, the in-vehicle system resumes the route following procedure (line **1808**). If on the other hand, even the closest point on the planned route is still more than the off-route tolerance from the (D)GPS position, then the location correction procedure is not successful and a route replanning procedure is initiated.

Referring still to FIG. **18**, the route replanning procedure involves first estimating the vehicle's location on main roads network **1000** (FIG. **10**) that is stored in the vehicle. The GPS location estimate is used to find a link along which the vehicle is traveling (line **1811**).

Once the vehicle has been located on the main roads network, the in-vehicle system calculates a best route that leads to one of the maneuver or way points along the previously planned route (line **1813**).

The newly planned route to the maneuver or way point on the previous route, along with the remaining portion of the previously planned route then becomes the new planned route which replaces the previous one (line **1815**). The link-by-link route following procedure is then reentered (line **1816**).

Specific aspects of the general operation of the system are described in the following sections. These aspects includes route planning, including in-vehicle destination specification as well as computation of the best route at the server system. The specific aspects also include the guidance operations carried out by the in vehicle system, as well as route replanning operations carried out by the in-vehicle system when it detects that the vehicle is off route. In addition, operation of the system in which the fleet of vehicles is used to collect traffic related data is described below.

### 3.2 Route Planning (FIGS. 15A-B)

Route planning involves several steps, as shown in FIGS. **15A-B**. In particular, the route planning operation includes:
- Destination specification (line **1502**, FIG. **15A**)
- Starting location determination (line **1503**, FIG. **15A**)
- Querying the server system (lines **1504-1510**, FIG. **15A**; lines **1552-1560**, FIG. **15B**)
- Route planning (line **1561**, FIG. **15B**)
- Route and spot map downloading (lines **1562-1563**, FIG. **15B**, line **1512**, FIG. **15A**)
Specific operations carried out by the in-vehicle and server systems in each of these steps are described in the following sections.

### 3.2.1 Destination Input

As shown in FIG. **15A** (line **1502**), the first phase of navigation to a desired destination is destination input by the operator of the vehicle. In-vehicle system **105** (FIGS. **1,2**) enables the operator to specify a destination in a number of different ways. In general, the in-vehicle system uses in-vehicle database **432** (FIG. **4**) to provide alternative in scrolling lists from which the operator chooses. A destination specification can be one of:
- A street address (e.g., city, street, and number),
- A point of interest (e.g., city, type of point of interest, and a selection from a list),
- A "yellow pages" listing (e.g., type of listing, and a selection from a list),
- A telephone number of the destination,
- A pair of cross streets,
- A selection from a list of recently specified destinations, and
- A selection from a list of previously stored destinations in a user's "profile".
In an initial interaction with the system, the operator first specifies what method of destination input will be used, for example, by selecting from a displayed list of choices.

### 3.2.1.1 Street Address Specification

One way that the operator can specify a destination is by the street address of the destination. The destination specification in this case is a fully specified (country, state, city, street, number) combination. The user does not necessarily have to enter each of these fields in turn. For instance, the current (i.e., previously used) country and state can be used as defaults.

Alternative sequences of field specifications can be used. In one sequence, the operator first selects a city from a scrolling list of cities in the current (country, state). Referring to FIG. **11**, the list of valid states is obtained from *CityState* table **1130**. After the operator selects a desired city, the in-vehicle system presents a scrolling list of valid streets names in that city. The list of valid street names is obtained using *AddressCityState* table **1100**, and associated *AddressStreet* table **1150**, *StreetRecord* table **1160**, and *StreetName* table **1170**. After the operator selects a desired street, the operator enters a street number. The in-vehicle system validates the number using *AddressStreet* table **1150** and *AddressRange* table **1180**.

In the above procedure, alternative methods of selecting from lists of valid names can be used, including scrolling through a list using "up" and "down" buttons, and spelling a prefix of the name until it unambiguously specifies a full name. An alphanumeric keyboard is not necessarily provided with this system. If one is not provided, the operator enters letters of a spelling, or digits of a street address, by moving a cursor to a display of the desired letter or digit and selecting that letter or digit.

There are times when the city of the desired destination is not known. In that case, the city can be initially left unknown. The list of valid street names presented to the operator by the in-vehicle system is then all the streets in the current state. After the street name is selected, if the city is ambiguous, the operator selects from the list of possible cities and then proceeds to input the street number. Alternatively, disambiguation of the city of a destination street can be left until after a street number is also specified.

### 3.2.1.2 Point of Interest Specification

In specifying a destination by a point of interest (POI), the operator first selects from a list of types of points of interests. Examples of types of POIs include banking locations, gas stations, hospitals, and restaurants. Referring to FIG. **14**, the list of valid types is obtained by the in-vehicle system from *POITypes* table **1420**.

The operator can select a particular POI of the selected POI type in a number of ways. In a first way, the operator next selects a city in which to find the destination POI. Using *POINameCity* table **1430**, the system displays a list of names, addresses and phone numbers of POIs of the selected type in the selected city. The operator then selects from the list of displayed POIs. The phone number can be useful, for instance, if the operator wants to call the destination, such as a restaurant, before deciding to travel to the destination.

Rather than specifying the city, the system can display the POIs by their proximity to the current location of the vehicle. The GPS-based latitude and longitude estimates are compared to the *Latitude*/*Longitude* field of records in *POIList* table **1450**, for POIs of the selected POI type. The in-vehicle system then displays the POIs in order of proximity to the current location rather than alphabetically.

### 3.2.1.3 "Yellow Pages"

In order to support an operator specifying a destination to the in-vehicle system using "yellow pages" listings, the in-vehicle database **432** does not have the capacity to include all the possible listings that an operator may be looking for. Instead, only the categories of listings are included, for example, "jewelry stores." The in-vehicle system first displays a list of categories from which the operator selects a particular category. The operator then selects a particular destination city, or requests listings in the proximity of the current location. The in-vehicle system presents a list of categories to the operator and the operator selects from the list. Note that the destination is not completely specified at this point since a particular destination (i.e., a street address) has not yet been determined.

After the communication session with the server is established, the server downloads the specific listings in the selected yellow pages category to the in-vehicle system, either according to the selected city, or according to the proximity to the vehicle's location. The operator then selects from the downloaded list.

### 3.2.1.4 Other destination specifications

Several optional ways of specifying a destination can also be supported by in the in-vehicle system.

An operator can specify a destination by selecting a pair of cross streets. To support selection of a pair of cross streets, in-vehicle database **432** includes a table of valid pairs of main streets, and possible pairs of main and side streets or even pairs of side streets. The operator selects a first street. A list of valid cross streets are then displayed and the operator selects one from the list.

As in destination specification by street number, if the city is not specified before specifying the cross streets, the city is disambiguated after one or both of the street names are selected.

An operator can specify a destination by specifying the telephone number of the destination. A complete telephone directory is not stored in in-vehicle database **432**, therefore, the validity of the telephone number, other than perhaps the validity of the area code, is not verified before the in-vehicle system establishes the communication session with the server system. The server system receives the telephone number and looks in up in a "reverse" telephone directory to determine the street address of the destination.

As is described further below, individual operators can have stored profiles that are stored in the vehicle and may have corresponding storage on the server system. This profile can hold typical destinations, such as "work," "home," "airport," etc. for which the operator has previously specified particular locations.

An operator can specify a destination by selecting from the most recently specified locations. For example, the operator may be returning to a recently visited work site.

Alternative versions of the system allow specification of a destination by street address, but the in-vehicle system does not have data with which to validate the address ranges for the specified street. For instance, the in-vehicle system may not have the capability to validate any street numbers, or the destination may be outside a geographic range for which it has stored address range data. If the in-vehicle system cannot validate the street address, it nevertheless establishes a communication session with the server computer. The server computer then completes the validation procedure.

### 3.2.2 Starting Location Determination

The in-vehicle system sends to the server system either an estimate of its position, or sends raw GPS data from its GPS receiver from which the server system computes the vehicle's position (line **1503**, FIG. **15A**).

There are situations in which the vehicle cannot receive signals from the GPS satellites at its starting location. For example, this would be the case if the vehicle were in an underground garage. In such a case, the vehicle relies on location estimates that the system made prior to reaching the starting location. Furthermore, after a GPS receiver is first powered on, there can be a significant interval before which it can provide location estimates. For example, the GPS receiver must locate each of the satellites that are in range, and compute their locations in orbit.

The in-vehicle system therefore maintains a history of GPS location estimates on an ongoing basis, even when the operator is not being guided along a route. This history is stored in a non-volatile memory in the in-vehicle system before the system is shut off. Therefore, if GPS signals cannot be received at the starting location, the latest GPS location estimate in the stored history is used.

In addition to sending location related data to the server system, the in-vehicle system also sends speed and orientation data. The orientation can be obtained from either past consecutive GPS location estimates, or from the magnetic compass. The speed and orientation information is used by the server system, for example, to disambiguate which of a number of nearby road segments the vehicle is on based on the class of road segments and the allowable directions of travel on those segments.

If the vehicle was guided to the starting location during a previous navigation session, the starting location can be based on dead reckoning along the previously planned route.

Once the server system provides GPS correction data to the in-vehicle system, the in-vehicle system updates its starting location using the GPS correction data (line **1602**, FIG. **16**). For instance, if the GPS correction data is pseudorange correction data, the in-vehicle system provides the pseudorange correction data to its GPS receiver and receives the corrected position estimate from the GPS receiver. If the GPS correction data is offsets in latitude and longitude, the in-vehicle system applies these offsets to the estimated position output from its GPS receiver.

### 3.2.3 Server Query

When the in-vehicle system establishes a communication session with the server system (line **1504-1510**, FIG. **15A**), it does so in two steps. First the in-vehicle system establishes a cellular telephone connection to the server system, and then it establishes a modulated data session on the cellular telephone connection.

In the first step, the cellular telephone connection is established by the in-vehicle system dialing a specific number to reach the server system. The in-vehicle system can handle typical error conditions that might be found in an analog cellular telephone network, such as being out of range of the cellular system, or the cellular system not having the capacity to establish the call.

In the second step, once the telephone connection is set up, the in-vehicle system attempts to establish a data connection with the server system. Typical modems carry out a negotiation phase in which compatible modulation, compression, and error correcting protocols are selected. In order to reduce the time needed to set up the communication session, a particular set of protocols is preselected, for example as the "lowest" common protocol that all vehicles support. The server system expects communication using this lowest protocol. This allows data to flow as soon as possible without waiting for the protocol negotiation phase to be completed. Since the amount of data to be transferred is relatively small, the time taken in negotiating the best protocols would likely be larger than the time saved by sending the data using the negotiated protocol rather than with the preselected protocol.

### 3.2.4 Route Planning

Route planning at the server system (line **1561**, FIG. **15B**) uses well known route finding approaches. In particular, two instances of the well-known A* ("A-Star") graph search algorithm are used in conjunction with road network **700** (FIG. **700**). One instance of the A* algorithm starts at the starting location and one starts "backwards" from the desired destination. The A* algorithm is a type of "best first" search approach. At any point executing the algorithm, the actual distance along the graph from an initial node to a set of intermediate nodes has been computed. A lower bound (or in some versions of the algorithm, an estimate) of the distance from each of the intermediate nodes to the final node is added to the actual distance. The intermediate node with the lowest sum is extended. If the lower bounds are used, this algorithm produces the shortest path from the initial node to the final node. Using the two instances of the A* algorithm, a best path is chosen after there are intermediate nodes in common for the two instances of the algorithm.

Alternatives to the A* route planning algorithms can be used. For instance, Dijstra's algorithm, or another type of best first algorithm can be used.

Route planning can be based on a variety of criteria. A shortest total distance uses the actual link distances in the road network to determine the cost of a path. The lower bound on the remaining path can be straight-line distance between an intermediate node and the final node. Route planning can alternatively be based on lowest expected travel time. Travel time along a link can be based on an expected speed for different road classes, or can be based on specific speed data stored on the server system and associated with particular links. For example, the server system may know that certain links are congested with slower than expected speeds for their road classes. The route planning algorithm would then tend to avoid such a congested link if there are alternative routes that can be taken.

Other alternative route planning approaches can also be used on the server system. For instance, routes can be constrained to follow particular road segments, and the cost of routes can include other factors than distance or expected travel time, such as toll fees along the route.

### 3.2.5 Route and Spot Map Download

Referring to FIGS. **8** and **9**, the server system downloads a route as a sequence of links joined by maneuver points, and downloads spot maps as small graphs around the starting location or the selected maneuver points (lines **1562-1563**, FIG. **15B**, line **1512**, FIG. **15A**). In order to reduce the download time needed, this data is represented as a compact data structure.

The planned route is downloaded as a sequence of route links using a compressed format. For each link in the planned route, the downloaded information includes:
- The latitude and longitude of the starting node (maneuver point) of the link, encoded as 32-bit integers in units of 10⁻⁵ degrees,
- Turn information, encoded as an index representing messages such as "turn right," "keep left," etc.,
- The number of "arms" at the current maneuver point,
- The number of way points before the next maneuver, and
- The rank (e.g., the size or classification) of the road segment associated with this link.
In addition, for each way point, the data for a link includes:
- The change in latitude and longitude from the previous way point, or from the starting node for the first way point, encoded as 12-bit integers in units of 10⁻⁵ degrees.
Note that 12-bit encoding of the change in latitude or longitude limits the change to approximately 2¹²x10⁻⁵=0.04 degrees. If a segment of the route planned by the server system includes a greater change between successive maneuver or way points, the server system inserts additional way points that are sufficiently close to encode the changes in the 12-bit quantities.

In addition, for each link, the downloaded data includes:
- The length of text fields, if any, associated with the name of the street associated with the link, and the name of the street to be turned onto at the next maneuver point, and with any signage or other special information to be presented to the operator, and
- The text fields themselves.
For each "arm" at a maneuver point, the downloaded data includes data related to the angles at which the intersecting streets join at the maneuver point, thereby allowing a relatively accurate graphical representation of the maneuver to be displayed to the operator.

This route download format provides a compact representation that can be downloaded quickly from the server to the vehicle. Alternative versions of the system can take advantage of data in the in-vehicle database to reduce the amount of data still further, for example, by referencing stored street names or by using references to nodes in the main roads network that is already stored in the vehicle. Alternative versions of the system can also include additional information related to the links. For example, link travel speeds can be downloaded, particularly if the links are known by the server to be exceptionally congested.

An alternative approach to route downloading includes use of predefined sequences of road segments that are stored in the in-vehicle systems. The server system replaces an sequence of road segments, maneuver points, and waypoints, with a reference to the stored predefine sequence. In this way, typically traveled routes, for example, along a highway do not have to be downloaded explicitly. The server system can periodically update the stored sequences in the vehicles to reflect the typically requested routes by those vehicles. Alternatively, the in-vehicle system retains a memory of previously downloaded routes, and the server can refer to portions of those routes when downloading a newly planned route.

### 3.3 Guidance

Guiding the operator to the desired destination involves several aspects of operation of the in-vehicle system. These include:
- A startup maneuver (FIG. **16**),
- Dead reckoning location tracking (FIG. **17**, line **1706**),
- GPS location tracking and off-route detection (FIG. **17**, lines **1707-1710**), and
- Maneuver notification and detection (FIG. **17**, lines **1712-1722**).
These aspects are described in the following sections.

### 3.3.1 Startup Maneuvers

There are several reasons that an operator may not be able to follow an initial route. One is inaccuracy of the initial location of a vehicle. For instance, the GPS may indicate that the vehicle is on a street, when in fact it is in a nearby parking lot or an adjacent street. Also, if a vehicle is pointing in the opposite direction on a street than the server system expects, then the vehicle is likely to go off route right from the very first step. Also, following directions at the start of a route can be difficult, for instance, due to the close spacing of side streets, inadequate signs, distractions, traffic, etc.

For these and other reasons, the system does not rely on an operator making no mistakes right from the very initial starting location. Instead, the starting location is used to determine the spot map that is downloaded to the vehicle. The spot map typically covers only two or three intersections in any direction from the starting location. The planned route is shown in conjunction with the spot map, as is the vehicle's DGPS based location. The operator uses this map representation to get onto the planned route.

Once the vehicle is on a segment of the planned route, and traveling in the correct direction, the turn-by-turn guidance phase begins.

### 3.3.2 Dead Reckoning Location Tracking

Once the in-vehicle system enters the turn-by-turn route following (guidance) phase, the in-vehicle system maintains a dead reckoning location estimate of the vehicle. In general, the in-vehicle system tracks the vehicle under the assumption that the operator is trying to follow the instructions. Dead reckoning is based on converting the velocity signal from velocity sensor **232** and the straight line approximations of the links between maneuver or way points along the planned route into an updated location. In particular, if the in-vehicle system assumes that the vehicle is at a known maneuver point, then as the vehicle travels a distance measured according to the velocity signal, the in-vehicle system estimates the vehicle's location as the point that is the measured distance along the sequence of links from the maneuver point. The locations of the nodes at the ends of each link are known to the in-vehicle system, therefore, the in-vehicle system essentially uses the direction of the links to estimate the direction that the vehicle is traveling as it leaves the maneuver point, and as it passes over subsequent links on the route.

Dead reckoning relies on a known correspondence between the velocity signal and the distance traveled. Several factors affect this correspondence, including tire pressure which is affected by temperature, which affects the circumference of the tires. In order to improve the accuracy by which the distance traveled is estimated from the velocity signal, an ongoing calibration procedure is supported. When the in-vehicle system detects a maneuver, it compares the velocity sensor-based distance estimate and the map-based distance estimate. The in-vehicle system adjusts a scale factor relating the number of velocity signal pulses to the distance traveled so that the velocity sensor and map-based traveled distance estimates match.

### 3.3.3 GPS Location Tracking and Off-Route Detection

While the operator is being directed from maneuver to maneuver along the planned route, the in-vehicle system continuously updates its GPS-based location estimate while the GPS satellite signals are received. In addition, there are intervals during which the in-vehicle system has current GPS correction data that it provides to the GPS receiver in order to improve the accuracy of the GPS-location estimates, for instance, in a differential correction mode.

GPS correction data is received by the in-vehicle system from the server system when the planned route is downloaded. In alternative versions of the system, there may be other times at which the server provides differential correction data, for instance during communication sessions that are established for another purpose.

The in-vehicle system can also compute its own GPS correction data when it knows its location precisely. The in-vehicle system estimates its location very accurately when it detects that a planned maneuver is executed by the operator, since an accurate location of each maneuver is downloaded for the server system when the planned route is downloaded.

Therefore, while negotiating the planned route, the in-vehicle system receives a stream of GPS or DGPS based location estimates. These location estimates are compared on an ongoing basis to the dead reckoning position estimates also maintained by the in-vehicle system.

After a vehicle executes a maneuver, and in particular when GPS correction data is computed based on the location of the maneuver point and the raw GPS data recorded when the vehicle passes through the maneuver point, the GPS-based location and the dead-reckoning positions should match. As a vehicle correctly passes along the planned link, the dead-reckoning position and the GPS-based position are expected to diverge somewhat for several reasons. These reasons include increased error in the GPS estimates, and possible map errors.

The GPS correction data is provided to the GPS receiver for approximately one minute after the maneuver. During that time, their utility slowly decreases, that is, the error of the DGPS based location estimates slowly increases. After the GPS correction data is no longer used, the GPS error is expected to remain within a fixed range.

The error in the dead reckoning position estimate grows primarily due to error in estimating the distance traveled along the links. Also map errors, both in the length of links and the location of waypoints or maneuver points, can contribute to a growing dead reckoning position error.

The combination of a growing error in each of the two terms is compensated for by using an increasing tolerance beyond which an off-route condition is detected by the in-vehicle system. The tolerance starts at 150 feet. The tolerance increases at a rate of 1 foot per 100 feet traveled until the tolerance reaches 500 feet.

If at any point the difference between the two location estimates exceeds the tolerance, the in-vehicle system detects an off-route condition it attempts to correct the dead reckoning position estimate and it that is unsuccessful, it executes a route replanning procedure (see Section 3.4).

### 3.3.4 Maneuver Notification and Detection

Maneuver notification and detection both use the dead reckoning position estimate, or more particularly, use a dead reckoning estimate of the scalar distance traveled along the planned route from a previously detected maneuver.

The in-vehicle system gives instructions to the operator at distance prior to when the in-vehicle system expects the vehicle to execute the next maneuver. This accounts for both the reaction time needed by the operator, as well as inaccuracy in the system's estimate of the distance to the next maneuver. In order to account for the different amount of time or distance needed by an operator to act on a command, the instructions are given farther from the next maneuver on high-speed links, such as highways, than on small residential streets. Each road class has a fixed distance from an upcoming maneuver at which the next instructions are given.

The in-vehicle system also gives voice prompts as the vehicle enters the notification window. Graphical and text prompts and instructions are displayed at least from the point that the vehicle enters the notification window, and can be displayed sooner.

In a distance-based window around the point at which the in-vehicle system expected the next maneuver to be carried out, the in-vehicle system attempts to detect the exact point at which the maneuver occurs. For instance, if the maneuver involves a right angle turn, the output of the onboard magnetic compass or the GPS-based direction estimate is used to reliably detect the maneuver. Also, sensing of the vehicle speed to detect certain classes of maneuvers, such as stopping at a toll booth.

Certain maneuvers cannot be detected with high accuracy. For instance, a turn may be too gradual to detect using the signal produced by a magnetic compass. If the vehicle leaves the maneuver detection window without detecting the expected maneuver, then the in-vehicle system simply continues to update the dead reckoning position until a subsequent maneuver is detected.

### 3.3.4.1 Display and Voice Commands

In addition to receiving audible instructions, the maneuver notification and instructions are provided on the in-vehicle display. The display include:
- A graphical illustration of the "distance to go" until the next maneuver, or example as a bar chart that gradually fills as the link is traversed,
- A digital "distance to go," for instance a number in miles or feet,
- A graphical representation of the upcoming road geometry at the next maneuver, for instance showing the angles at which all roads meeting at the next intersection joint, and
- Sign text that should be visible at the next maneuver point.

Voice instructions include a variety of pre-stored phrases, including commands to notify a driver of an upcoming maneuver, and commands to instruct and operator to make a maneuver at the point that the instruction is give.

### 3.4 Route Replanning

When the in-vehicle system detects that a vehicle is off the planned route, it executes a route replanning procedure (FIG. **18**). The first step is to determine where the vehicle is traveling on the main road network **1000**, which is stored in in-vehicle database **432**.

The in-vehicle system uses the GPS (or DGPS) based latitude and longitude estimates to search through the list of nodes in *MasterNode* table **1310**. Sequential GPS-based position estimates, or the output of the magnetic compass, are used to determine a direction of travel along a link joining to adjacent nodes. This then determines which link in *LinkSegments* table **1330** the vehicle is traveling on, and the direction of travel along that link.

The in-vehicle system then executes a shortest path search (e.g., an A* search) starting at that link to one of the maneuver or way points along the planned route. A number of points, or alternatively all points, on either side of the last maneuver point are used as points at which the replanned route can join up with the previously planned route. For instance, ten points before and after the last detected maneuver point can be used. Limiting the number of points can reduce the amount of computation (time and memory) required to replan the route. If there are fewer than ten remaining points, then the actual desired destination is one of the points that the replanned route can "join" to planned route.

As in the server system based route planning approach, the in-vehicle system uses an A* algorithm to plan the route. The starting point is determined using the scanning of *MasterNode* table **1310**, as described above. As intermediate nodes are considered in the A* search, the lower bound on the distance to the desired location is minimum over the maneuver and way points near the last detected maneuver point of the sum of the straight-line distance from the intermediate point to the maneuver or way point plus the previously calculated distance along the previously planned route from that maneuver or way point to the desired destination. In this way, the best point of rejoining the previously planned route is found.

As in the server system based route planning, the cost of traveling over a link can be based on the length of the link, an estimate of the time to travel over the link based on the road class of the line, or an estimate of the time to travel a link based on specific road speed information associated with that link.

### 3.5 Floating Vehicle Data Collection

Referring to FIG. **19**, navigation application **512** which is part of server system **125** makes use of a traffic database **524** when planning routes that are based on expected travel time. In the description of the system above, traffic information provided from an external information system **130**, such as from a government run traffic monitoring authority, is used to populate traffic database **524**.

In addition to relying on an externally provided traffic information, server system **125** makes use of some or all vehicles **100** as "probes" for collecting traffic information. Navigation application **512** receives the traffic information from the probe vehicles and feeds the collected traffic information back into traffic database **524** In addition, the server system optionally. sends updated traffic information to the external information system. In this way, the vehicle navigation system can be a source of traffic information in addition to, or instead of, being a consumer of traffic information from external information system **130**.

Two modes of data collection are used. First, ongoing traffic "profile" data is collected by the in-vehicle systems in probe vehicles. Occasionally, the probe vehicles upload their collected data to the server system and the server system updates its traffic database based on the uploaded information. In the second mode, the in-vehicle systems in the probe vehicles detect when the vehicle's speed is significantly slower than would be expected based on the class of road being traveled, on or based on.traffic related data that is stored in the vehicle and which relates the expected speed to the road segment being traveled on. When the in-vehicle system detects that the vehicle's speed is slower that expected, that is, it detects any exception from expected traffic conditions, it immediately reports the exception to the server system so that the server system can update its traffic database **524** to reflects unexpected traffic conditions.

### 3.5.1 Traffic Profile Collection

In the first mode of traffic data collection, navigation application **412** in in-vehicle system **105** of a probe vehicle collects on an ongoing basis a history (a profile) of the speed that the vehicle travels on links of the main roads network (or equivalently the transit times on the links). The in-vehicle system collects the traffic profile data independently of the guidance function. That is, the vehicle does not have to be guided by the navigation system in order to collect traffic profile data. The navigation application stores the time of day and the speed traveled on each link in a link speed log **1920**.

In order to build up link speed log **1920**, the in-vehicle system tracks the vehicle's location on main roads network **1000** that is stored in in-vehicle database **432**. Using the GPS location estimates it receives from its GPS receiver, the in-vehicle system detects when the vehicle is following a road segment (link) of the main roads network. The in-vehicle system records the time the vehicle takes to travel from one end to the other of the link and stores a reference to the link, the time of day, and the speed traveled along the link in the link speed log. As the vehicle travels over multiple links of the main roads network, a series of travel times is logged, each associated with a link that was traversed.

Occasionally, for example when vehicle leaves the main roads network, or periodically, such as daily, the in-vehicle system sends the logged profile information it has stored in link speed log **1920** to the server system over a data connection that the in-vehicle system initiates over a cellular telephone connection with the server system. After it has sent the information, the in-vehicle system clears its link speed log.

The operator of the vehicle has the option of enabling or disabling either mode of data collection through the user interface of the in-vehicle system. Also, the server system can enable (or request) either type of collection. For instance, the server system can enable more vehicles if it needs more data, and disable data collection in some vehicles if it is receiving more data than it needs.

At the server system, navigation application **512** receives the logged speed information from a number of probe vehicles. Using this collected information, the navigation application updates traffic database **524**. For example, the navigation application incorporates the reported speeds for a particular link into an average speed for that link that is stored in its traffic database. Optionally, the server system provides the updated traffic information to external information system **130**.

On the server system, traffic database **524** includes an average link speed for each link (in each direction), as well as a start and a stop time for a morning and an evening rush "hour" (busy period). For each busy period, the traffic database includes the average speed during that period.

Various alternative intervals can be used. For instance, equal five-minute intervals can be used, as can unequal intervals, such as 1 hour intervals in the middle of the night and five-minute intervals at typically busy periods.

Optionally, the average link speeds stored in the server system's traffic database **524** are downloaded and stored in a link speeds database **1910** in the in-vehicle system of each vehicle. This link speeds database is used, for instance, by the in-vehicle system when replanning a route bases on a shortest expected travel time.

### 3.5.2 Exception Reporting

In the second mode of traffic data collection, the in-vehicle system makes use of information in its link speeds database **1910**, which includes expected travel speeds for all the links in main roads network **100**. Multiple travel times are stored for each link, for instance, to account for the variations due to morning and evening busy periods. For each link, the following information is recorded:
- Typical expected speed
- Start and end times of the morning busy period
- Expected speed during the morning busy period
- Start and end times of the evening busy period
- Expected speed during the evening busy period
Alternatively, other types of intervals can be used to store the speed information. Also, rather than relying on specific speed information for a link, the in-vehicle system can alternatively base the typical expected speed for a link on the class of the link. For instance, a link on a class 4 (highway) link can be typically expected to be close to the speed limit (e.g., 55 MPH).

As in the profile data collection mode, the in-vehicle system of a probe vehicle tracks the location of the vehicle using GPS location estimates as it traverses links of the main roads network, and detects when the vehicle traverses particular links in the main roads network. The in-vehicle system detects that a traffic exception has occurred if a travel speed along a link is substantially slower or faster than expected (e.g. 75% of the expected speed or slower) for that link at that time of day.

When a traffic exception occurs, the in-vehicle system establishes a communication session with the server system by placing a cellular telephone call to the server system. The in-vehicle system transmits a short data message encoding the exception, identifying the link and the travel speed, to the server system.

In an alternative approach to exception reporting, a vehicle makes a probabilistic choice of whether to transmit the exception message. In this alternative, not all vehicles which encounter the exception transmit to the server system, thereby reducing the communication load on the server system.

The server system receives the exception message from the in-vehicle system. The server system updates traffic database **524**, which it uses to plan routes, based on the exception messages it receives from the probe vehicles. If there is a sufficient "density" of probe vehicles on the road network, the server system will typically receive exception messages from multiple probe vehicle. Therefore, optionally, the server system can require that two or more probe vehicles report an exception (i.e., a traffic exception is confirmed by another vehicle) before updating its traffic database.

The server system resets its expected speeds for the links on which exceptions have been reported after a period of time when no more exceptions are reported by probe vehicles for those links.

Operation of the exception data collection mode does not necessarily require intervention of the operator. The operator of a probe vehicle can explicitly enable or disable exception reporting. Also, the in-vehicle system can be configured so that the operator is asked to confirm the validity of exception information before it is sent to the server system. For instance the in-vehicle system can display the exception message to the operator and the operator must press a button indicating that the message is valid before it is sent to the server system. This confirmation approach avoids having a vehicle report an exception when slow speed is due to a non-traffic related reason, such as stopping for gas along the link.

In a alternative version of the system, exceptions are logged rather than immediately reported to the server system. The in-vehicle system then uploads the logged exceptions to the server system in the same way that it can upload logged profile data.

### 3.6 Server Control

In an alternative version of the system, the system controls the vehicle data collection, for instance, to limit the rate at which it receives data from probe vehicles, or to receive data related to particular regions or roadways. Alternative methods of controlling the collection include the following.

In a first alternative, the probe vehicles do not transmit their logged speed data unless queried by the server system. The server system polls (interrogates) vehicles to receive their logged speed data. In one approach, the server system polls vehicles based on the geographic region in which the vehicles typically travel. For instance, if the server system does not have up-to-date data for roads in a region, it polls vehicles that typically travel in that region. To poll a vehicle, the server system places a cellular telephone call, or otherwise notifies the vehicle, the in-vehicle system. The in-vehicle system receives the call and provides its logged speed data to the server. For example, an alternative to placing a telephone call is to broadcast a message to a number of vehicles over a broadcast channel, such as on a sideband of a commercial radio broadcast. In another approach to this alternative, the server system polls vehicles for which it has recently provided planned routes and which it expects will have logged speed data for road segments on those routes.

In another alternative, the in-vehicle systems place the calls to the server system to transfer logged speed data, but the server system has previously provided instructions to the in-vehicle system regarding when to initiate that call. For instance, when the server system provides a planned route to the in-vehicle system, the planned route is accompanied by an instruction to call the server system after the vehicle has passed a particular road segment.

In another alternative, whenever an in-vehicle system calls the server system, the server system optionally requests the vehicle's logged speed data. In the case that the vehicle is calling for a route planning service, the data transfer occurs during the interval between the upload of the desired destination and the start of the download of the planned route, or in any other interval that would have otherwise been unused for data transfer from the vehicle to the server system.

In another alternative, when the server system provides a planned route to an in-vehicle system, the planned route includes the server system's up-to-date expected link times (i.e., the link times reflect recently received probe data). In this alternative, traffic exceptions on a segment are not reported to the server if the server system was already aware of the exception at the time that it planned the route.

### 3.7 Data Fusion

In alternative versions of the system, the server system receives traffic related information from external information services. For instance, the server system receives traffic incident reports (e.g., breakdown reports) that it uses to predict slow travel speeds, rather than waiting to receive data from probe vehicles for those segments. Similarly, the server system receives information related to events (e.g., sporting events) that it uses to predict link speeds. The server system combines these predicted link speeds with link speeds reported by probe vehicles when calculating new routes for in-vehicle systems according to as shortest expected travel time criterion.

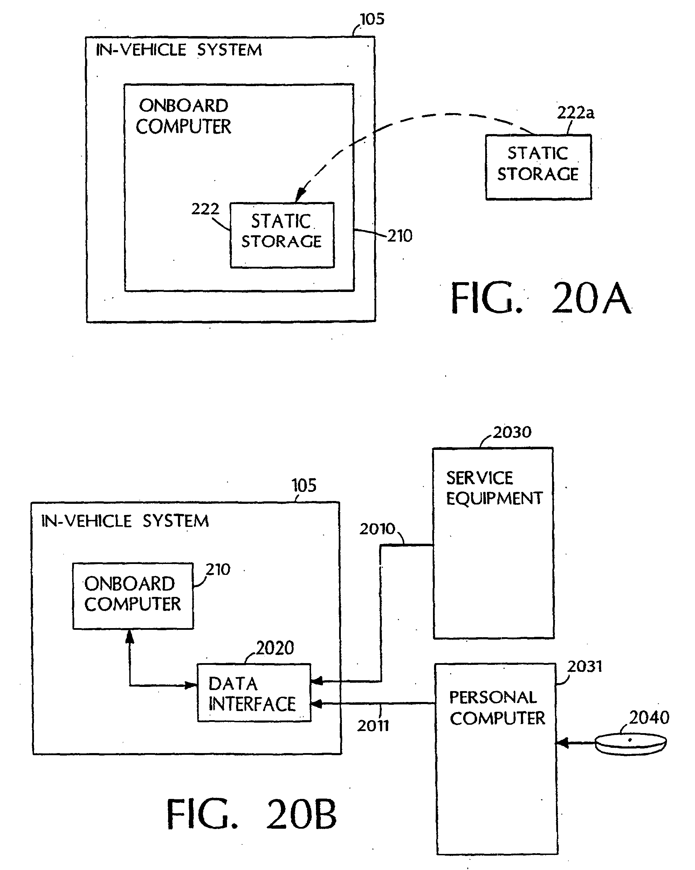

### 4 VEHICLE UPDATING (FIGS. 20A-C)

In the system described above, in-vehicle system and the server system include data that is kept consistent. For instance, the main roads network stored in the in-vehicle system includes a subset of the roads network on the server system. When the data is consistent, a destination specification that is validated by the in-vehicle system will be valid for the server system as well.

The information used by the overall navigation system is updated from time to time. For example, the map provider may provide periodic updates to the road network to correct previous errors or to reflect changes in the road network, such as addition of a new road.

Alternative versions of the system use one or more approaches to updating the in-vehicle system to keep the in-vehicle and system databases consistent. When the databases are consistent a destination specification that is validated by an in-vehicle system will not be found to be invalid by the server system when it tries to plan a route to the destination. Conversely, when the databases are consistent, the in-vehicle will not rule out a destination specification that the server system would have found to be valid, for example because a new road has been added to the road network.

The system also includes the provision to update the software in addition to the data for the in-vehicle system. For instance, the user interface for existing functionality can be changed-by downloading new code. Also, entirely new functionality can be downloaded. This new or changed functionality can include modified menus and graphics that are used to interface with the operator.

New software and interface definitions are integrated into the in-vehicle system using one of several well-known alternative techniques. For example, new software modules can provide predefined entry points that are accessed from existing software modules in the in-vehicle system. Data describing the interfaces to new software modules can be downloaded with the code that implements the modules. User interface definitions can be implemented using low-level code that manipulates the pixels on the display, or can use a high-level description such as one using a markup language (e.g., HDML).

The navigation system uses one or more of the following alternative approaches to updating the in-vehicle system:
- Physically replacing a static storage device in the in-vehicle system,
- Updating over a high-speed data link, for example at a dealership or other service center, and
- Updating over a cellular telephone based data link.
Each of these approaches are described in the following sections.

### 4.1 Physical Replacement of the Storage Device

Referring to FIG. **20A**, in a first approach, static storage **222** in onboard computer **210** in in-vehicle system **105** is a removable device. For instance, static storage **222** can be a PCMCIA card housing a magnetic disk or a flash memory system.

Updating the in-vehicle system involves replacing storage device **222** with another storage device **222a** that has been preloaded with an updated version of the databases. This enables the entire database to be updated quickly, for instance, when the main roads network needs to be updated to correspond to a different geographic area.

### 4.2 Updating over a High Speed Data Link

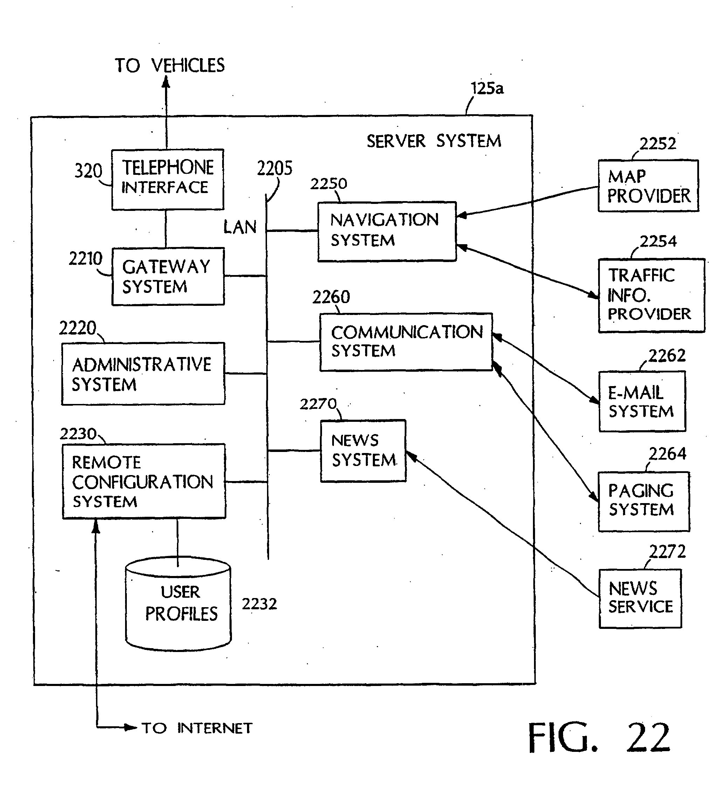

Referring to FIG. **22B**, a second approach to updating the in-vehicle system involves transferring data to the in-vehicle system over a high-speed (e.g., up to 1Mb/s) data connection. The in-vehicle system includes a data interface **2020** that is connected to onboard computer **210** in in-vehicle system **105**. A source of the update data is connected to the data interface. For instance, a high-speed connection **2010** can be connected to service equipment **2030** at a dealership or a service center which downloads the updated information using industry standard communication protocols, such as Ford's SCP or the SAE J1850 protocol. Alternatively, an owner of a vehicle can connect a personal computer **2031** (such as a laptop computer) to the in-vehicle system. Updates for the in-vehicle system would be obtained by the owner on a recorded medium **2040**, such as a CD-ROM, or over the Internet. Connection **2011** between the personal computer and the in-vehicle system can use a wireless connection, such as an infra-red link.

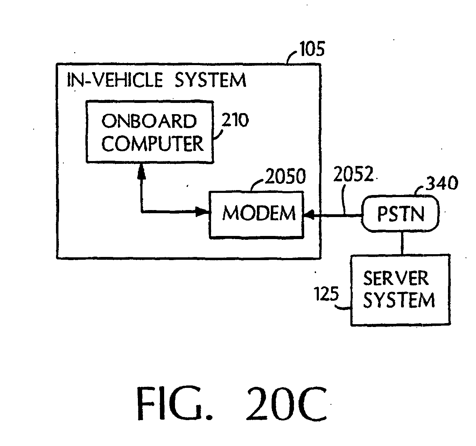

Referring to FIG. **20C**, another alternative approach to updating the in-vehicle system is to use a wired telephone connection. In this approach, the in-vehicle system includes a moderate speed modem **2050** (e.g., a 56kb/s modem) and a telephone connector. The owner provides a physical connection **2052** from the telephone connector to the public telephone network (PSTN) **340**. The in-vehicle system places a telephone call to the server system, or another server used to provide data updates, and downloads the data at a moderate speed over the telephone connection.

### 4.3 Updating over a Wireless Link

A third approach to updating the in-vehicle database uses a wireless data connections between the in-vehicle system and the server system, such as over a cellular telephone connection. The amount of data that can be transmitted in a reasonable time (e.g., less than an hour) is limited by the relatively slow data transfer speeds that can be achieved over such connections. Typically, the database is incrementally updated over a wireless data connection rather than an entire new copy of the database being downloaded.

One of several alternative approaches to initiating a database update over a wireless data connection with the server system are used. First, an operator can explicitly request an update through the user interface of the in-vehicle system. Second, an update can be requested by an in-vehicle system based on an elapsed time since a prior update. Third, database edits can be downloaded prior to or after downloading a planned route after the in-vehicle system establishes a communication session with the server system. Fourth, the server system can place telephone calls to each of the vehicles and "push" the edit updates to each vehicle in turn.

In order to maintain consistency between the in-vehicle data and the server-system's data, data in the database is associated with a version number. Each time the server system updates its data, it updates the version number. When a vehicle requests a route, it also provides the version number of the data that was used to validate the destination specification of the route. The server system uses the received version number to identify which, if any, updates have not yet been downloaded to the calling vehicle.

The server does not necessarily have to download all updates in one session. Instead, it provides updates incrementally. In the incremental approach, the most relevant updates are provided first. For instance, the server system updates the main roads network in the city in which the vehicle typically travels prior to downloading updates for another city.

If an in-vehicle system has an out-of-date database, the validated destination specification that it sends the server system may be invalid due to changes in the road network. For instance, a street name may have changed. Therefore, if the server system receives an invalid destination specification from the in-vehicle system, the server system notifies the in-vehicle system which notifies the operator. The operator can then specify another address, or wait for updated information to be downloaded to the vehicle from the server system.

### 5 ADDITIONAL SERVICES

In addition to providing navigation services, alternative versions of the vehicle information system provide additional services such as roadside assistance,. remote vehicle control, traffic information, and communication related services.

### 5.1 Emergency and Roadside Assistance

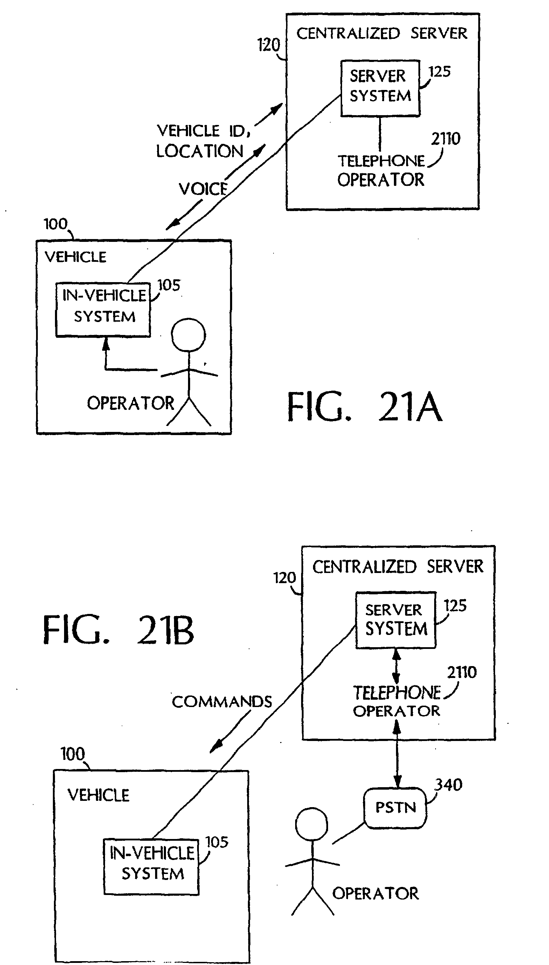

Emergency and roadside assistance provides an operator of a vehicle with a way of contacting assistance and providing the location of the vehicle. Referring to FIG. **21A**, in an operator initiated interaction, the operator selects the emergency and roadside assistance option on the user interface of the in-vehicle system. The vehicle places a cellular telephone call to the server system, or to another server that the in-vehicle system has been configured to call to handle such requests. When the call is established, the in-vehicle system establishes a data connection to the called server. The in-vehicle system transfers a unique identification of the vehicle to the server. The unique identification is used by the server to access information such as the make, model, and color of the vehicle, which may be useful to a dispatched service vehicle finding the operator's vehicle. The in-vehicle system also sends its estimated location, or raw GPS data, and most recent direction of travel based on its GPS measurements. The server system applies GPS correction data to the vehicle's estimated location or raw GPS data to determine a corrected location estimate. After the in-vehicle system transfers the data to the server, the operator can communicate with a telephone operator **2110** at the server using the telephone handset in the vehicle. This allows the operator to provide details that may be useful in dispatching assistance.

In addition to operator-initiated requests for assistance, the in-vehicle system includes a mode in which activation of the air-bag system, or some other indication of an emergency situation, automatically initiates a request for assistance. This mode would be used, for example, if the vehicle is involved in a collision and the operator is unable to or does not think to call for assistance.

### 5.2 Remote Vehicle Control

Another additional service is remote vehicle control. The in-vehicle system is coupled to vehicle subsystems, such as the door locking subsystem, or the vehicle control subsystem. This coupling can use standard vehicle data communication infrastructure found in many vehicles today, such as the SCP (the Standard Corporate Protocol) bus found in vehicles manufactured by the Ford Motor Company.

### 5.2.1 Door Unlocking

Referring to FIG. **21B**, remote door unlocking is an example of a remote vehicle control service. When an operator is locked out of his or her car, he or she contacts the server system, for example, by placing a telephone call to a telephone operator with access to the server system. After appropriate authentication by the telephone operator, the telephone operator initiates a remote door unlocking procedure that is executed by the server system.

The vehicle's cellular telephone receiver is not typically left on when the operator has left the vehicle in order to reduce battery usage. Therefore, the server system does not, in general, simply make a telephone call to the in-vehicle system to unlock the doors.

On a precise schedule, the in-vehicle system repeatedly powers up the cellular telephone receiver to determine whether an incoming call is being placed at that time. For instance, the in-vehicle system repeats this cycle every 15 minutes. If the in-vehicle system does not detect a call, it powers down the telephone receiver until the next scheduled listening time.

The vehicle's schedule is stored at the server system, and the in-vehicle system and the server system share a common time base, for example based on GPS signals. The server system waits until the locked vehicle's next scheduled listening time to make a cellular telephone call to establish a data communication channel with the in-vehicle system. Once a data connection is established, the server system sends a command to the in-vehicle system to unlock the doors.

when the operator of the vehicle requests the door unlocking service from the telephone operator, the telephone operator informs the vehicle operator of the time that the doors will be unlocked, since the schedule of vehicle listening times is available to the telephone operator.

### 5.2.2 Vehicle Immobilization

A vehicle immobilization service uses a similar strategy as the door unlocking service. A vehicle operator calls a telephone operator at the centralized server to notify the telephone operator that the vehicle has been stolen. The server system can either make a telephone call to the in-vehicle system immediately, if the telephone receiver in the vehicle is powered on, or relies on the scheduled power-up mode that is used for the door unlocking functionality described above.

In either case, when the in-vehicle system and the server system communicate, the in-vehicle system provides the vehicle's location to the server system, and the server system provides to the in-vehicle system a command to disable the vehicle. The in-vehicle system then sends a command to a vehicle system to disable the vehicle.

### 5.3 Traffic Information

The traffic information service provides an operator with a report of traffic conditions on a small set of previously specified "trips." For instance, an operator may have a choice of three alternative ways of getting go from home to work. When the operator is about to begin the trip, he or she interacts with the in-vehicle system to request traffic information on those trips. The in-vehicle system contacts the server system, which provides current traffic information for the operator's trips.

One approach by which the operator specifies his or her "trips" uses an onboard stored table of a set of trip segments. These segments would typically involve many segments of the road network. For instance, a portion of a major highway between two intersecting highways might be trip segment. The operator "builds" the personal trips by choosing a subset of trip segments. When the in-vehicle system contacts the server system to determine traffic conditions on the operator's personal trips, the in-vehicle system transfers the operator's selected trip segments to the server system.

The server system uses its traffic database, which include current link speeds on segments of the road network, to determine the current traffic conditions on the operator's trips. Various alternative presentations of the traffic conditions can be used. In this version of the system, the traffic conditions are categorized into a small number of categories, such as normal, congested, and severely congested, and each category is displayed graphically to the operator using a different icon.

In alternative versions of the system, the server system actively contacts a user if an exceptional traffic condition occurs on one of the user's previously specified trips. For instance, the server system can send the information to the in-vehicle system by calling the in-vehicle system, or send a pager message, send email, or place a telephone call to the user informing the user of the exceptional condition.

In another alternative, the user specifies several alternative trips. When the server system detects an exceptional traffic condition on one of the user's specified trips, it actively downloads traffic information related to the alternative trips. In this way, the user does not have to wait for the in-vehicle system to make a call to the server system to replan the route.

### 6 EXTENSIBLE SERVER ARCHITECTURE (FIG. 22)

Referring to FIG. **22**, an alternative server system **125a** provides the functionality of the server system **125** described above, and in addition provides an extensible architecture for providing other services to the vehicles. Server system **125a** includes multiple server computers coupled over a LAN **2205**. Alternatively, the functionality of these server computers can be implemented on a smaller number of computers, or on a single computer that implements all their functions.

Server system **125a** includes a gateway system **2210** that is coupled to telephone interface **320**. Gateway system **2210** is used to provide a communication gateway between vehicles **100** and server computers in server system **125a**, and implements a message routing function so that communication received from an in-vehicle system is directed to the appropriate server computer. Gateway system **2210** does not necessarily have to interpret the content of data passing between the server systems and the vehicles.

The server computers include a navigation system **2250** on which the navigation application described above executes. When an in-vehicle system initiates a communication session with server system **125a** to request a route planning service, gateway system **2210** determines that the session should be connected to navigation system **2250** using information provided by the in-vehicle system in the communication session. For instance, the in-vehicle system identifies the navigation service in the initial portion of the data stream. Alternatively, different services implemented by server system **125a** have different telephone numbers that are assigned to telephone interface **320**, and gateway system **2210** routes the communication to the appropriate server computer based on the number called by the in-vehicle system.

Navigation system **2250** implements the functionality of server system **125** as shown in FIG. **5**. That is, it includes an interface to GPS receiver **325**, and includes server map database **520**, yellow pages database **522**, and traffic database **524**. Navigation system **2250** is coupled to map provider **2252**, and a traffic information system **2254**.

Another service provided by server system **125a** is implemented by a communication system **2260**. Communication system **2260** is coupled to external communication systems, including an email system **2262** and a paging system **2264**. These external communication systems forward messages addressed to particular vehicles to communication system **2260**. Communication system **2260** requests from gateway system **2210** that a data communication channel be established with the particular vehicles, and then passes data and commands to the in-vehicle systems.

The in-vehicle systems in the vehicles include software modules that correspond to the services provided by the server system. For instance, communication sent from communication system **2260** to an in-vehicle system is received by a communication module that interprets the data and commands it receives. For instance, a message communication module displays paging or email messages on the display of the in-vehicle system, or alternatively plays them as synthesized speech messages.

A news system **2270** provides a service which sends data to vehicles which corresponds to news stories that are of interest to a particular vehicle operators. The news stories are provided by an external news service **2272**.

Server system **125a** also includes a remote configuration system **2230** that is coupled to LAN **2205**, and that is also coupled to the Internet. Using the remote configuration system, users of the navigation system can modify their records in user profiles **2232** that are stored at the server system. A user's profile is downloaded by the server system to the in-vehicle system in that user's vehicle, or can alternatively be stored on the server system. Information in the user profiles can include various types of information, including stored destinations that the user can select from when specifying a destination to the in-vehicle system. For instance, a user can specify a list of frequent destinations over the Internet, and then later in the vehicle choose a particular destination in that list by selecting from a display of the list by the in-vehicle system.

Another aspect of the user's profile relates to the traffic information service. Rather than having to define a set of trips using the in-vehicle interface, the user selects trips using a graphical map-based interface. For instance, an entire map of the highway system or the main roads network is displayed. The user selects paths on the graph by selecting sequences of trip segments. These trips are downloaded to the user's vehicle, or can be stored by the server system. If they are stored at the server system, when the user initiates a traffic information request in the vehicle, the in-vehicle system does not necessarily transfer the specifications of the operator's trips, rather it specifies the identity of the operator and the server system looks up the operator's stored trips.

A user's profile can also include preferences such as particular roads the user wants to avoid. The user's profile can alternatively include a time saving above which the user is willing to use a road that he or she otherwise wants to avoid.

A user also uses remote configuration system **2230** to input route planning requests. For instance, the user provides a destination specification to the remote configuration system and the server system downloads a planned route to the destination prior to the user entering the vehicle. The user can access the remote configuration system in a variety of ways, including over the Internet, and over a voice telephone connection interacting with an automatic speech recognition device at the server. In addition to specifying a destination, the user can also request notification of when he or she needs to start the trip in order to get to the destination at a particular time. The notification can be by telephone, pager, or using any of a variety of other notification methods.

A new service is added to server system **125a** by adding a server computer, updating gateway system **2210** so that communication for that service is routed to the new server computer, and updating the in-vehicle system by adding a corresponding software module to each of the in-vehicle systems. The in-vehicle systems are updated either over a cellular telephone connection, or over a physical connection, as described above (see Section 4).

Alternative version of the system do not necessarily include all the features described above. For instance, a traffic information system can include operator specified trips. The in-vehicle system contacts a server system for traffic information for those trips. The in-vehicle system does not need a GPS receiver, or a map database, of other features to support this feature alone.

In another alternative, the in-vehicle system does not necessarily support autonomous route replanning. The in-vehicle system can contact the server to replan the route, or to provide a map which it uses to replan the route, when the in-vehicle system detects that the vehicle has gone off-route.

An alternative version of the system provides a "detour" capability. In particular, an operator indicates a road segment that should be removed from a planned route, and the in-vehicle system plans a detour around that road segment using its main roads database.

In another alternative version of the system, the server system plans and downloads several routes, for instance planned according to different criteria, such as shortest time, shortest distance, etc. The in-vehicle system displays characteristics of the alternatives (e.g., time, distance) and the operator selects one. If the server have not yet downloaded al the routes, only the selected route is continued to be downloaded.

In another alternative version of the system, additional data is downloaded from the server system along with the route. For instance traffic information is downloaded and displayed to the operator. Also, advertising information, for example, for restaurants along the route are downloaded and displayed to the operator and the vehicle passes along the route. The downloaded additional data may be tailored to the individual driver by the server system, based on the vehicle identification it has received. For example, a driver's personal profile, or his pattern of previous travel can be used by the server to select advertising data to download to the vehicle for the in-vehicle system to present to the driver while he navigates the route.

In another alternative, traffic information is downloaded to the vehicle, for instance, according to a set of trips that have been specified by the operator. The traffic information is displayed along with a map of the road network. Traffic information is indicated using one of a variety of techniques, including text annotations, icons, or using color.

In another alternative, the server system does not download spot maps to the in-vehicle system. The in-vehicle system provides turn-by-turn instructions from the starting locations. For instance, the first instruction may be "proceed to street X," accompanied by an arrow indicating the direction the street X.

In another alternative, the in-vehicle system has a main roads network for autonomous replanning, but does not include address-range data for validating street addresses. The in-vehicle system instead relies on the server system to validate the street number specified by an operator. In this way, the in-vehicle system validates and address partially and relies on the server system completing the validation.

The same server system can concurrently support in-vehicle systems with different capabilities, such as the alternative capabilities described above.

Another alternative version enables an operator to specify a sequence of destinations. For example, the first destination can be a gas station, and the second destination is the operator's work. All the destinations in the sequence are validated before the in-vehicle system contacts the server system. The server system plans a route from the starting location to the first destination, and then from one destination to the next. The server system downloads the entire planned route to the in-vehicle system.

### 7 OTHER EMBODIMENTS

Still other versions of the system make use of alternative hardware configurations, and provide various sets of functionality. For example, driver information services other than navigation or traffic services are provide to a driver through an in-vehicle system. These information services rely of various sources of data, such as accessing data over the Internet.

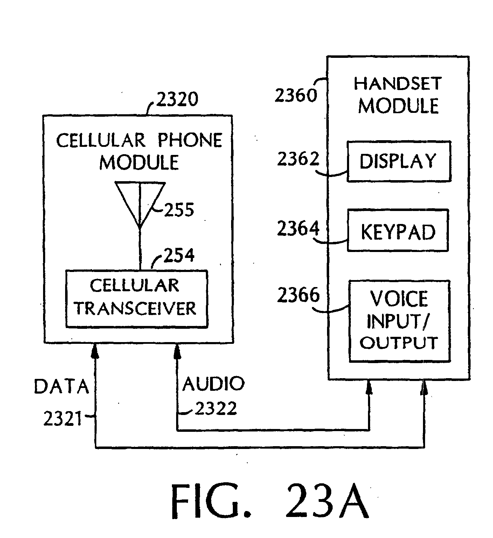

### 7.1 Modular transceiver/handset (FIGS. 23A-B)

One alternative version of the system makes use of a modular hardware architecture for the in-vehicle component of the system and which shares modules with the cellular telephone system. Alternative related embodiments make use of other wireless communication systems, including, for example, ground or satellite based wireless data networks.

This version of the in-vehicle component of a driver information system makes use of commercially available cellular telephone modules, for example, modules available from JRC Canada Inc. or from Audiovox Inc. Referring to FIG. **23A**, a standard arrangement of such modules includes a cellular telephone module **2320** that is connected to a handset module **2360** over a bidirectional data line **2321** and input and output audio lines **2322**. Similar standard modular arrangements include a controller module coupled between the handset module and the telephone module.

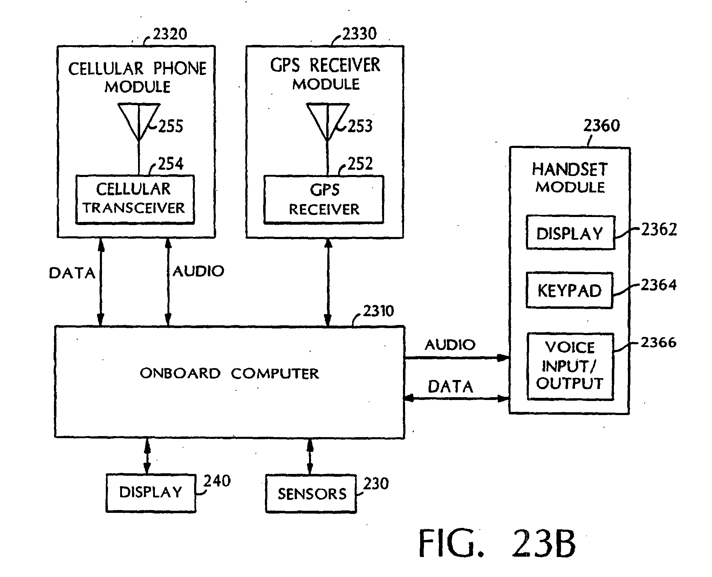

Referring to FIG. **23B**, in this version of the system, an onboard computer **2310** couples cellular phone module **2320** and handset module **2360**. Onboard computer **2310** is configured such that the driver uses handset module **2360** to make and receive cellular phone calls essentially in the same way as he or she would using the handset module in the standard configuration shown in FIG. **23A**. Additionally, onboard computer **2310** is configured to provide driver information services to the driver using handset module **2360** for the interface with the driver, and using cellular phone module **2320** for access to the server system using cellular telephone communication. The system illustrated in FIG. **23B** provides similar capabilities as those of the system shown in FIG. **2**. In particular, onboard computer **2310** provides the navigation and control of user interface functionality provided by onboard computer **210** (FIG. **2**). However, rather than using separate I/O devices **240** (FIG. **2**) to provide input and output for the driver information system, onboard computer **2310** uses the input and output components of handset module **2360** instead.

Referring still to FIGS. **23A-B,** cellular phone module **2320** includes a cellular transceiver **254** and an integrated or external cellular telephone antenna **255**. In a standard configuration shown in FIG. **23A**, cellular phone module **232** accepts digital information, such as digit dialing information, from handset module **2360** over data line **2321** and provides digital information, such as caller information, to handset module **2360** over data line **2321**. Referring to FIG. **23B**, in this embodiment, onboard computer **2310** provides digital information, such as dialing information or data for transmission to the server system, to cellular phone module **2320** and accepts digital information from cellular phone module **2320**, such as map-related data. Cellular phone module **2320** also accepts and provides audio signals, typically speech signals, for telephone communication with the server system.

Handset module **2360** includes a display **2362**. In this embodiment, display **2362** provides a grid of two lines of 8 character positions each, although larger or somewhat smaller displays, or bitmapped rather than character encoded displays can alternatively be used. Cellular phone module **2320** and handset module **2360** communicate over data line **2321** using a communication protocol that provides for external control of display **2362**.

Handset module **2360** also includes a keypad **2364**, for instance, a keypad proving 10 numeric keys and several function-specific keys. The communication protocol used on data line **2321** provides for external signaling of information related to the buttons pressed by a user on keypad **2364**.

Handset module **2360** also includes an audio input/output device **2366**, for instance, a microphone and a speaker. Audio signals pass to and from audio input/output device **2366** and cellular phone module **2320** over audio line **2322**.

Referring still to FIG. **23B**, in operation, when handset module **2360** is used as a normal cellular telephone, onboard computer **2310** passes data signals and audio signals between cellular phone module **2320** and handset module **2360**. When the system operates in a driver information mode, onboard computer **2310** accepts and processes digital signals encoding a user's input on keypad **2364**, and generates digital signals which control display **2362** to provide alphanumeric and iconic output on display **2362**. Onboard computer **2310** thereby provides navigation and traffic information to the driver using display **2362**.

Display **2362** provides a limited output capability, particularly compared to the capabilities of bitmapped graphical displays in other embodiments described above. Onboard computer **2310** provides navigation instructions to the driver on this limited display using an extended set of displayable symbols (i.e., glyphs, pictograms) that includes arrows indicating different degrees of turns, such as 45, 90, and 135 turns in each direction, and 0 degree and 180 degree (U-turn) turns. An instruction such as "turn right on Main Street in 0.5 miles" is displayed using a right turn arrow symbol, the distance "0.5," and the name of the cross street "Main." Alternative approaches to presenting navigation instructions on the limited display can also be used.

Onboard computer **2310** generates audio instructions which it passes to handset module **2360** over the audio path coupling the onboard computer and the handset module. Alternatively, the onboard computer can pass the audio instructions through an external speaker system, for example, through the vehicle's audio system. The audio signal can include spoken instructions, for example, using synthesized or recorded speech. In alternative embodiments, rather than sending a speech signal from computer **2310** to handset module **2360**, handset module 2360 emits tones in response to digital signals passed from onboard computer **2310**, or in response to audio signals synthesized by onboard computer **2310**.

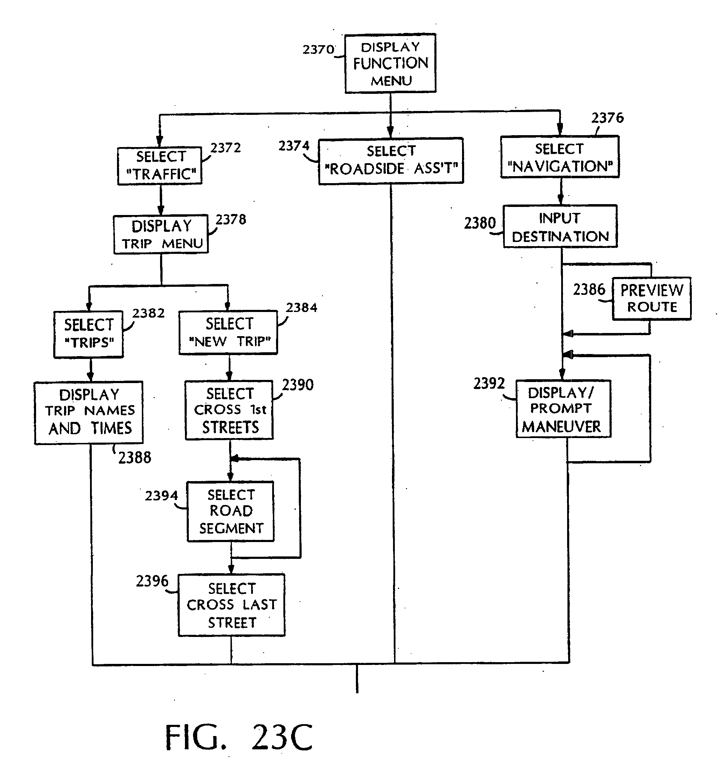

The user inputs commands and information to the onboard system using an approach which is similar to that shown in FIGS. **2A-C** and which makes use of the limited graphical input and feedback available on a radio display. This user interface extends the nested scrolling menus that are often used to control the functions or to access names in a directory on a cellular phone. Referring to FIG. **23C**, the menu choices for telephone operations are extended to include a "navigation," (step **2376**) "road-side assistance," (step **2374**) and "traffic information" (step **2372**) choices at the top level of menu choices. The user selects named items, including cities, cross streets, points of interest, and road segments, by spelling via the keypad, selection from a scrolling list, or both. The user can make reference to a printed map, as described in Section 7.4, to determine appropriate inputs.

Onboard computer **2310** optionally provides a speech recognition capability whereby the driver speaks commands into voice input/output device **2366** rather than entering them on keypad **2364**. Onboard computer **2310** processes the spoken commands, or alternatively, passes the speech signal to a remote server that performs all or some of the speech recognition function and returns the result to the onboard computer.

Referring still to FIG. **23B**, onboard computer is optionally coupled to sensors **230** and to display **240**. Sensors **230** provide information related to the distance and direction traveled by the vehicle. Display **230** provides graphical output instead of, or in addition to, that provided through display **2362** in handset **2360**.

In FIG. **23B**, onboard computer **2420** is shown directly connected to handset **2360**, cellular phone module **2320**, sensors **230**, and display **240**. In an alternative embodiment, some or all of these components communicate over a bus within the vehicle, or through in-vehicle radio-frequency communication. For instance, display **240** may be a general information display that is controlled via a standardized in-vehicle data bus. In other embodiments, onboard computer **2420** is coupled to additional in-vehicle devices, such as a vehicle diagnosis system, or a paging receiver, over a communication bus.

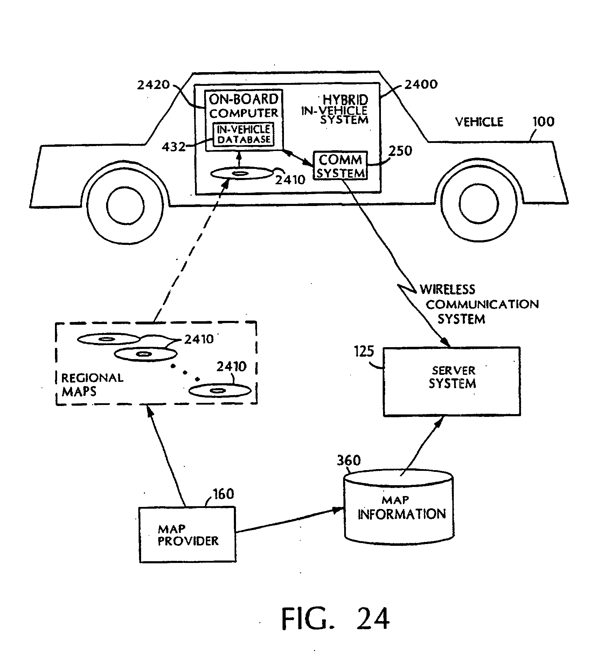

### 7.2 Hybrid autonomous and client/server system (FIG. 24)

Another alternative version of the system makes use of a combination of autonomous and client/server operation. Referring to FIG. **24**, a hybrid in-vehicle system **2400** includes an on-board computer **2420** coupled to a remote server system **125** through a communication system **250** over a wireless communication link of a cellular telephone system. As in the system shown in FIG. **1**, server system **125** makes use of map information **360** provided by map provider **160**.

In FIG. **24**, in-vehicle system **2400** has a regional map **2410** stored on a removable medium such as a CD-ROM. Regional maps **2410** are provided by, or derived from raw information provided by map provider **160**. The regional maps include local roads (that is, the regional maps are not limited to main roads), but are limited in the geographic area covered. In contrast onboard computer **2420** also includes in-vehicle database **432** that includes main roads but not necessarily local roads. Since the regional maps are limited to a relatively small geographic area, detailed local road information can generally be included without exceeding the capacity of the storage devices. In alternative embodiments, the main roads data for a large area and the local road data from a smaller area can be distributed together on a single storage medium, and this data may be embedded in the in-vehicle system rather than provided on a removable storage medium.

By including local road information on regional maps **2410**, the in-vehicle system can, in certain situations, determine a route from a source to a destination locations without requiring the services of a server system. If the vehicle is within the boundaries of regional map **2410** and the user enters a destination that is also within the boundaries of regional map **2410**, on-board computer **2420** computes the shortest path based on the data stored in regional map **2410.** On-board computer **2410** does not have to make contact with server system **125** in order to determine the route to follow, but optionally does so to acquire traffic information which it then uses to determine the best route to follow.

If the source and destination are both outside the boundaries of the regional map, the system operates in a client/server manner described previously. That is, the user enters a destination which is fully or partially validated by the on-board computer. The on-board computer then contacts server system **125** to request a route from the source to the destination. The server system provides the route which the in-vehicle system follows.

If the route from the source to the destination is only partially within the boundary of the regional map, a combination of autonomous and client/server operation is used. For instance, the regional map includes a metropolitan area within which the vehicle is located, and the user specifies a destination in another metropolitan area, then the initial portion of the route is planned by the on-board computer. The on-board computer requests route information for the portion of the trip for which it does not have detailed map information. The server system provides a partial route and the on-board computer joins the downloaded partial route with the portion of the route that it computes itself. In this way, the amount of data that needs to be downloaded is reduced. Also, if the vehicle is within the boundary of the regional map, driving instructions can be provided quickly without having to wait for a download of even the first maneuvers from the server system.

An alternative related embodiment relies on a regional map **2410** for autonomous operation, but does not include an in-vehicle database **432** that has map information. In such an embodiment, the in-vehicle system contracts a remote server for all route planning functions outside the area covered by regional map **2410**, including validation of the specification of a destination. Several alternative server modes can be used. These include a fully automated server of the type described above. Alternatively, when a driver wants directions to a point outside the region covered by regional map **2410**, he may contact a human operator at a remote server. The human operator inputs the destination specification into the automated route planning system at the remote server. The remote server then downloads the planned route and other information related to the planned route (e.g., a corridor map, points of interest along the route, route-specific advertising) to the in-vehicle system.

Related embodiments that do include map information in in-vehicle database **432** include various amounts of such map information. For instance, only information required to validate a destination specification (e.g., street names, address ranges) may be included. Alternatively, in-vehicle database may include information related to the locations of the main roads as well.

Another alternative embodiment provides the driver with the option of specifying that the remote server is to plan the route even though the route is within the region covered by regional map **2410** and could be planned by the in-vehicle system. For instance, the in-vehicle system may not have current traffic information and therefore would not necessarily plan the best route in view of actual traffic conditions. When the driver specifies that the remote server is to plan the route, the in-vehicle system uses regional map **2410** to validate the destination specification. Then, rather than planning the route, it contacts the remote server which computes the route based on information not available to the in-vehicle system, for example, based on up-to-date traffic information.

Additional "third-party" data such as advertising may be sent to the information pod along with requested information. For instance, in addition to traffic information in the vicinity of the vehicle, advertising for restaurants or gas stations in the vicinity may be downloaded and presented to the driver as well. The downloaded data (e.g., advertising) can be customized to the driver based on the uploaded identification of the information pod. For instance, the server system may choose advertising based on the driver's previous travel pattern, on his actual location, or on some other personal profile available to the server system.

### 7.3 Removable storage

Alternative versions of the system include user customized databases that are provided to the user on a removable medium, or are downloaded directly into the in-vehicle system, for instance, over a telephone connection or over a high-speed data connection such as an infra-red link to a personal computer. For instance, in the hybrid system shown in FIG. **24**, regional map **2410** would be customized for the user. In other embodiments of the system, a customized in-vehicle database (see, e.g., FIG. **2** in-vehicle database **432** in static storage **222**) is stored on a removable device. These customized databases can use alternative types of removable media such as CD-ROM, solid-state memory cards, and magnetic disks. These databases are customized for a particular user, for example, to include the areas typically traveled by the user. Such a customized database can be provided to the user in a variety of ways, including by sending custom recorded media by mail or by downloading the data over the Internet and creating the removable medium on user's personal computer. In this way, the geographic area for which map data is stored in the vehicle can be tailored to the area typically traveled by a user. In addition, in the hybrid system shown in FIG. **24**, the region for which complete map data is stored can be separately chosen from the region for which only main roads data is stored.

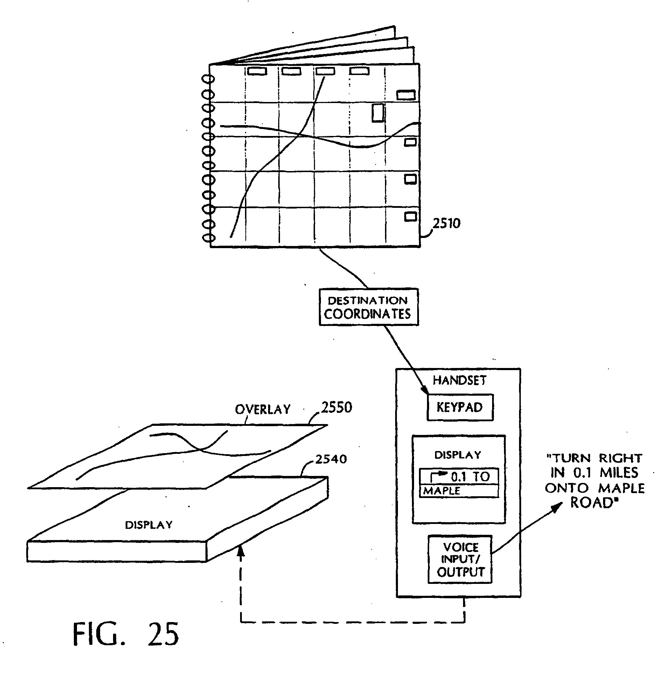

### 7.4 Limited I/O system (FIG. 25)

An alternative version of the system makes use of a printed map to augment the user interface. The driver consults the map when interacting with the electronic system. Referring to FIG. **25**, a user has a printed map **2510**. In one use of the printed map, the map includes printed annotations, such as official road names, abbreviated names, numbers, or other codes for main roads, Cartesian coordinates along the horizontal and vertical edges of the map, and coded identifiers of road segments. Rather than entering the street name and number of an address, for example, the driver looks up the general location on the map, and enters the specification (e.g., the Cartesian coordinates) of the destination. The user interface of the electronic system is greatly simplified. For example, in the system shown in FIG. **23**, in which the input and output capabilities are limited to those available on a telephone handset, the coordinates of a destination can be quickly entered using the keyboard.

In a related approach, printed map **2510** includes multiple sheets. One sheet provides an overview, for example, showing only main roads. Detailed maps for portions of the main roads map show local streets. In specifying a location, the driver first finds the location on the main roads map and determines a general specification. Then, the driver consults one of the detailed maps to specify the precise location and more precise specification.

Referring still to FIG. **25**, a translucent overlay **2550** is placed over a display **2540**. Display **2540** has limited resolution, for instance, being formed by an array of point LEDs that can be individually illuminated. Overlay **2550** has printed features that augment the point illuminations of the LEDs. In one alternative, overlay **2550** has a printed map showing the main roads in a region. The LEDs are then used to indicate a point on a main road, for instance, indicating a point of congestion on a highway. In another alternative, overlay **2550** does not necessarily show roads, but rather illustrates geographic areas, such as quadrants (NW, NE, SW, SE) or boundaries of cities. The illumination of one or more points is used, for example, to indicate general regions of traffic congestion. The general location of the vehicle, or the destination of a route can also be indicated using such a overlay. In yet another alternative approach, the "overlay" may not be removable, for instance, being permanently attached to display **2540**. Driver can have a variety of overlay maps. These overlay maps can correspond to printed maps which provide additional detail.

Alternative related embodiments make use of printed maps or overlay displays individually, or in combination. Also, alternative embodiments provide traffic information to a driver without providing navigation or route-planning capabilities. Also, although display **2540** is illustrated as a separated device in FIG. **25**, the display can alternatively be integrated in the handset, and overlays can be applied to the display on the handset.

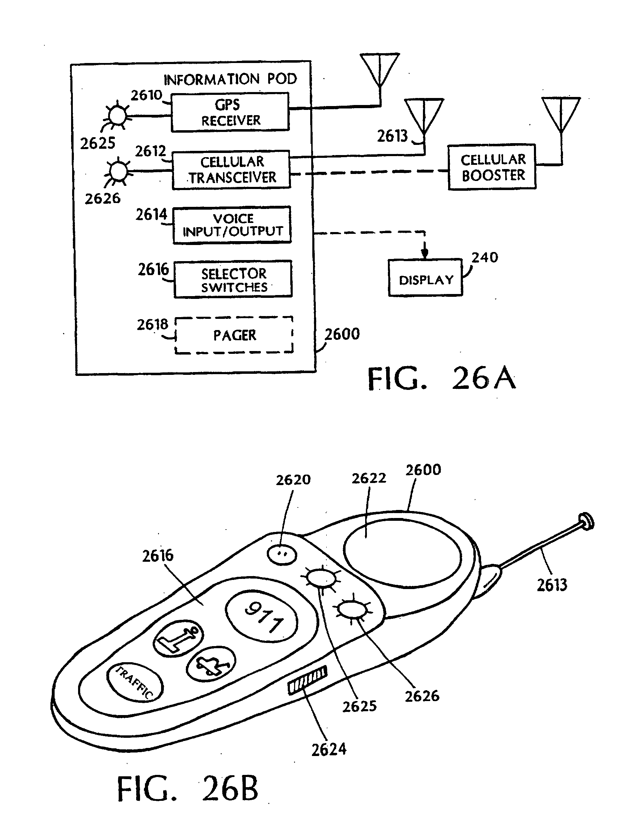

### 7.5 Low-cost self-contained handset system (FIGS. 26A-B)

Referring to FIGS. **26A-B,** another alternative version of the system is self-contained in a handset-sized unit, an "information pod" **2600.** This version of the system does not require significant integration with the vehicle since it does not use vehicle sensors, and it has integrated communication electronics. Information pod **2600** has an integrated GPS receiver **2610** and cellular transceiver **2612** and antenna **2613**. Optionally, the information pod can be coupled to a cellular booster and external antenna to provide greater communication range than possible solely.using the integrated cellular transceiver. Information pod **2600** has a voice input/output module **2614**, including a microphone **2620** and a speaker **2622**. Information pod **2600** also has selector switches **2616**, including switches for accessing traffic information, police, roadside assistance, concierge, and personal information services.

In operation, a driver initiates an interaction with the system by pressing one of selector switches **2616**. For instance, to request roadside assistance, the user presses the roadside assistance switch. The information pod establishes communication with a server system using cellular transceiver **2612**. The information pod determines the location (and optionally the direction last traveled, or past locations of the vehicle) of the vehicle using GPS receiver **2610** and sends that information to over the communication channel to the server. At this point, the server system can dispatch assistance to the driver, or alternative, establish voice communication between the driver and an operator using the voice input/output module. A driver accesses police or concierge services in a similar manner. In this way, the police or concierge immediately knows where the driver is located. For instance, if the driver is looking for a particular restaurant, a concierge can provide verbal directions based on the vehicle's actual location.

A driver accesses automated traffic information in a similar manner. After the driver presses the traffic switch, the information pod transmits the location of the vehicle to the server system. The server system then provides traffic information based on the vehicle's location. For instance, the server system provides audio advisory information for traffic incidents in the vehicle's general area by filtering advisory information available to it based on the vehicle's position. Alternatively, the driver may have previously specified a driver profile that includes typical routes traveled by that driver. The information pod accesses and sends the identity of the driver (or of the system) to the server system, and the server system then provides current traffic conditions on the specified routes in the vicinity of the vehicle.

A driver accesses a personal information service by pressing the personal information switch (e.g., by pressing a button marked "I"). The information pod contacts a server system and sends the identification of the pod. The server system has a stored profile for the driver which is accesses based on the identification it receives. The profile can identify information that the server system accesses, for instance, over the Internet. Such information can include newspaper articles on a user-selected topic, quotes of user-chosen stocks, or a local weather forecast. The driver maintains his profile through previous communication with the server system, for instance over an Internet "Web" based interface. The driver's personal information is passed from the server system to the information pod either as an audio signal that is played to the user, or alternatively as a data signal that is used by the information pod to present the information after the cellular telephone connection is broken. For instance, downloaded text data can be "spoken" using a speech synthesizer.

Information pod **2600** includes two status indicator lights. GPS status light **2625** indicates when the pod is receiving GPS information, and therefore when the pod can determine the its location. Cellular status light **2626** indicates when cellular transceiver **2612** is able to communicate with the cellular telephone system and can therefore contact the server system. These status lights indicate to the driver when the full services of the information pod are available. For instance, the driver may choose to wait for GPS status light **2625** to illuminate before requesting traffic information that relies on the unit's location.

Referring still to FIGS. **26A-B**, information pod **2600** is optionally coupled to display **240** through a connector **2624**. When information pod **2600** is connected to the display, additional information, such as detailed traffic information, are presented on the display to the driver. In alternative embodiments, information pod **2600** can also be coupled to other devices, such as a display, over an in-vehicle data bus into which the information pod is connected.

An alternative embodiment of the information pod incorporates a small display, such as display **2540** shown in FIG. **25**. Additionally, an overlay **2550** can be used over the display to augment the graphical information provided to the driver.

Other versions of this type of information pod provide route planning and limited navigation capabilities using speech recognition. For instance the driver speaks a desired destination. The speech is either processed in the information pod, or transmitted as it is spoken to the server, along with the GPS location of the vehicle. The server system then transmits the directions to the vehicle.

It is to be understood that the foregoing description is intended to illustrate and not to limit the scope of the invention, which is defined by the scope of the appended claims. Other embodiments are within the scope of the following claims.

## Claims

1. An in-vehicle navigation system for providing route information through a road network comprising:
a first stored database including information related to roads in the road network within a first geographic area; and
an onboard computer programmed to perform the functions of
(a) accepting a specification of a starting and an ending location in the road network,
(b) if the starting and the ending locations are within the first geographic area, planning a route through the road network from the starting to the ending locations without communicating with a remote server computer; and
(c) only if the starting or the ending locations are not within the first geographic area, communicating with a remote server computer to retrieve a information related to a route through the road network from the starting to the ending locations.

2. The in-vehicle navigation system of claim 1 wherein the first stored database is stored on a removable storage medium.

3. The in-vehicle navigation system of claim 1 further comprising a second stored database including information related to major roads in the road network within a second geographic area, wherein the first geographic area includes a common area within the second geographic area, and the first stored database includes information about roads in the common area that is not included in the second stored database.

4. A method of providing navigation information comprising:
accepting a specification of starting and an ending location in a roadway network;
accessing a second stored database that includes information related to major roads in the road network within a second geographic area;
accessing a first stored database that includes information related to roads in the road network within a first geographic area, wherein the first geographic area includes a common area within the second geographic area, and the first stored database includes information about roads in the common area that is not included in the second stored database;
if the starting and the ending locations are within the first geographic area, planning a route through the road network from the starting to the ending locations without communicating with a remote server computer; and
only if the starting or the ending locations are not within the first geographic area, communicating with a remote server computer to retrieve a information related to a route through the road network from the starting to the ending locations.

5. The method of claim 4 further comprising accepting the first stored database from a removable storage medium.

## Patentansprüche

1. Ein fahrzeuginternes Navigationssystem für die Bereitstellung von Routeninformationen über ein Straßennetz, bestehend aus:
einer ersten gespeicherten Datenbank mit Informationen zu den Straßen des Straßennetzes in einem ersten geografischen Bereich und
einem Bordcomputer, programmiert für folgende Funktionen:
(a) Eingabe der Definitionsdaten für den Startpunkt und den Endpunkt einer Route innerhalb des Straßennetzes,
(b) Wenn Start- und Endpunkt innerhalb des ersten geografischen Bereichs liegen: Planung einer Route innerhalb des Straßennetzes vom Startpunkt bis zum Endpunkt - ohne Datenaustausch mit einem abgesetzten Server-Computer, und
(c) Nur wenn Start- und Endpunkt nicht innerhalb des ersten geografischen Bereichs liegen: Datenaustausch mit einem abgesetzten Server-Computer, um Informationen zu einer bestimmten Route innerhalb des Straßennetzes vom Startpunkt bis zum Endpunkt abzurufen.

2. Ein fahrzeuginternes Navigationssystem gemäß Anspruch 1, bei dem die erste gespeicherte Datenbank auf einem austauschbaren Speichermedium vorliegt.

3. Ein fahrzeuginternes Navigationssystem gemäß Anspruch 1, das außerdem eine zweite gespeicherte Datenbank mit Informationen zu allen größeren Straßen innerhalb des Straßennetzes in einem zweiten geografischen Bereich umfasst, wobei der erste geografische Bereich und der zweite geografische Bereich einen gemeinsamen Bereich aufweisen und die erste gespeicherte Datenbank Informationen zu den Straßen in diesem gemeinsamen Bereich enthält, die nicht in der zweiten gespeicherten Datenbank enthalten sind.

4. Ein Verfahren für die Bereitstellung von Navigationsinformationen, das folgende Einzelschritte umfasst:
Eingabe der Definitionsdaten für den Startpunkt und den Endpunkt innerhalb eines Straßennetzes;
Zugriff auf eine zweite gespeicherte Datenbank mit Informationen zu allen größeren Straßen innerhalb des Straßennetzes in einem zweiten geografischen Bereich;
Zugriff auf eine erste gespeicherte Datenbank mit Informationen zu den Straßen des Straßennetzes in einem ersten geografischen Bereichs, wobei der erste geografische Bereich und der zweite geografische Bereich einen gemeinsamen Bereich aufweisen und die erste gespeicherte Datenbank Informationen zu den Straßen in diesem gemeinsamen Bereich enthält, die nicht in der zweiten gespeicherten Datenbank enthalten sind;
Wenn Start- und Endpunkt innerhalb des ersten geografischen Bereichs liegen: Planung einer Route innerhalb des straßennetzes vom Start- bis zum Endpunkt - ohne Datenaustausch mit einem abgesetzten Server-Computer; und
Nur, wenn Start- und Endpunkt nicht innerhalb des ersten geografischen Bereichs liegen: Datenaustausch mit einem abgesetzten Server-Computer, um Informationen zu einer bestimmten Route innerhalb des Straßennetzes vom Start- bis zum Endpunkt abzurufen.

5. Ein Verfahren gemäß Anspruch 4, das außerdem die Übernahme der ersten gespeicherten Datenbank von einem austauschbaren Speichermedium unterstützt.

## Revendications

1. Un système de navigation embarqué dans le véhicule fournissant des informations d'itinéraire sur un réseau routier. Ce système comprend :
une première base de données enregistrée contenant des informations relatives aux routes du réseau routier d'une première zone géographique, et
un ordinateur embarqué programmé pour exécuter les fonctions suivantes :
(a) accepter une spécification de points de départ et de destination dans un réseau routier,
(b) si les points de départ et de destination se trouvent dans la première zone géographique, planifier un itinéraire au travers du réseau routier, du point de départ au point de destination, sans communiquer avec un ordinateur de serveur à distance, et
(c) uniquement si le point de départ ou de destination ne se trouve pas dans la première zone géographique, communiquer avec un ordinateur de serveur à distance pour extraire des informations relatives à un itinéraire au travers du réseau routier, du point de départ au point de destination.

2. Le système de navigation embarqué dans le véhicule de la revendication 1 dans lequel la première base de données enregistrée est enregistrée sur un support de mémoire amovible.

3. Le système de navigation embarqué dans le véhicule (revendication 1) comprend par ailleurs une seconde base de données stockée, contenant des informations sur les routes principales du réseau routier d'une seconde zone géographique. La première zone géographique présente une zone commune avec la seconde zone géographique et la première base de données stockée contient des informations sur des routes de la zone commune qui ne sont pas reprises dans la seconde base de données stockée.

4. Une méthode fournissant des informations de navigation. Elle comprend :
l'acceptation d'une spécification de points de départ et de destination dans un réseau routier ;
l'accès à une seconde base de données stockée qui contient des informations sur les routes principales du réseau routier d'une seconde zone géographique ;
l'accès à une première base de données stockée qui contient des informations sur les routes du réseau routier de la première zone géographique. La première zone géographique présente une zone commune avec la seconde zone géographique et la première base de données stockée contient des informations sur des routes de la zone commune qui ne sont pas reprises dans la seconde base de données stockée ;
si les points de départ et de destination se trouvent dans la première zone géographique, la planification d'un itinéraire au travers du réseau routier, du point de départ au point de destination, sans communiquer avec un ordinateur de serveur à distance, et
uniquement si le point de départ ou de destination ne se trouve pas dans la première zone géographique, la communication avec un serveur distant pour extraire des informations relatives à un itinéraire au travers du réseau routier, du point de départ au point de destination.

5. La méthode de la revendication 4 comprend par ailleurs l'acceptation de la première base de données stockée à partir d'un support de mémoire amovible.
